(19) Europäisches Patentamt
European Patent Office
Office européen des brevets

(11) Numéro de publication: **0 141 702 B1**

# (12) FASCICULE DE BREVET EUROPEEN

(45) Date de publication du fascicule du brevet: **17.11.88**

(51) Int. Cl.⁴: **C 07 F 7/12**, C 01 B 33/107

(21) Numéro de dépôt: **84401848.1**

(22) Date de dépôt: **18.09.84**

(54) **Nouveau procédé de fabrication d'hydrogeno-silanes par réaction de redistribution.**

(30) Priorité: **28.09.83 FR 8315403**

(43) Date de publication de la demande: **15.05.85 Bulletin 85/20**

(45) Mention de la délivrance du brevet: **17.11.88 Bulletin 88/46**

(84) Etats contractants désignés: **AT BE CH DE FR GB IT LI NL SE**

(56) Documents cités: **FR - A - 2 119 477**

(73) Titulaire: **RHONE-POULENC CHIMIE, 25, quai Paul Doumer, F-92408 Courbevoie Cédex (FR)**

(72) Inventeur: **Lepage, Jean-Luc, 81, Chemin de Chavril, F-69110 - Sainte-Foy-Les-Lyon (FR)**
Inventeur: **Soula, Gérard, 33, rue Nungesser, F-69330 - Meyzieu (FR)**

(74) Mandataire: **Esson, Jean-Pierre et al, Rhône-Poulenc Interservices Service Brevets Chimie 25, quai Paul Doumer, F-92408 Courbevoie Cedex (FR)**

EP 0 141 702 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un nouveau procédé de fabrication d'hydrogéno-silanes par réaction de redistribution. Elle concerne plus particulièrement un procédé de fabrication de silane comportant au moins une liaison Si–H par réaction entre un silane moins hydrogéné ou non hydrogéné et un alkyle ou aryle hydrogéno-silane en présence d'un système catalytique.

Il est connu d'obtenir des silanes comportant au moins deux liaisons Si–H par dismutation de deux molécules d'hydrogéno-silane comportant éventuellement des groupements alkyle ou aryle. C'est ainsi que les brevets français n° 2 096 605, 2 118 725, 2 261 977, 2 290 447 et 2 290 448 décrivent de telles réactions de dismutation en présence de divers catalyseurs, la réaction mise en jeu lors de ces dismutations pouvant s'écrire:

$$2R_n\,H_m\,Si\,X_{4-(n+m)} \rightleftharpoons R_n\,H_{m+1}\,Si\,X_{3-(n+m)} + R_n\,H_{m-1}\,SiX_{5-(n+m)}$$

dans laquelle n représente un nombre entier égal à 0, 1 ou 2; m représente un nombre entier égal à 1, 2 ou 3 avec $n+m \leqslant 3$, R représente un groupement alkyle ou aryle et X un halogène.

Il est également connu d'obtenir des alkyle ou aryle hydrogéno-silanes par redistribution entre une molécule d'hydrogéno-silane et une molécule d'alkyle ou aryle halogéno-silane. Les catalyseurs décrits pour ces réactions de redistribution sont notamment ceux faisant l'objet des brevets français n° 1 603 167, 2 290 447, 2 467 855, 2 290 448, 2 096 605 et 2 119 477, les réactions mises en jeu lors de ces redistributions pouvant s'écrire:

$$H_mSiX_{4-m} + R_nSiX_{4-n} \rightarrow H_{m-1}SiX_{5-m} + R_nHSiX_{3-n}$$

dans laquelle m représente un nombre entier égal à 1, 2, 3 ou 4 et n représente un nombre entier égal à 1, 2 ou 3 et R représente un groupement alkyle ou aryle et X un halogène.

La présente invention concerne un nouveau procédé de fabrication d'hydrogéno-silane par une nouvelle réaction de redistribution entre un silane moins hydrogéné que celui désiré ou non hydrogéné et un alkyle ou aryle hydrogéno-silane en présence d'un système catalytique, la réaction mise en jeu lors de la redistribution pouvant s'écrire:

$$H_mSiX_{4-m} + R_nH_pSiX'_{4-(n+p)} \rightarrow H_{m+1}SiX_{3-m} + R_nH_{p-1}SiX'_{4-(n+p)}X$$

dans laquelle R représente un groupement alkyle ou aryle, X et X' identiques ou différents représentent un halogène ou un groupement alkoxy, m représente un nombre entier égal à 0, 1, 2 ou 3; n et p identiques ou différents représentent des nombres entiers égaux à 1, 2 ou 3 avec $n+p \leqslant 4$.

Le procédé selon l'invention permet de fabriquer des hydrogéno-silanes plus hydrogénés que le silane de départ avec des taux de transformation bien supérieurs à ceux que l'on obtient lorsque l'on fabrique ces produits par dismutation; il permet en outre de valoriser des sous-produits obtenus lors de la synthèse directe des méthylchlorosilanes tel que le méthyldichlorosilane. Par ailleurs, le procédé selon l'invention est particulièrement adapté pour fabriquer du trichlorosilane, du dichlorosilane et/ou du silane notamment selon les réactions:

$SiCl_4 + CH_3HSiCl_2 \rightarrow HSiCl_3 + CH_3SiCl_3$
$HSiCl_3 + CH_3HSiCl_2 \rightarrow H_2SiCl_2 + CH_3SiCl_3$
$HSiCl_3 + 3CH_3HSiCl_2 \rightarrow SiH_4 + 3CH_3SiCl_3$ (réaction globale)

Le procédé selon l'invention permet ainsi de fabriquer des matières premières permettant un accès aisé au silicium de qualité photovoltaïque ou électronique. Il permet également la valorisation du tétrachlorosilane, sous-produit lors de la fabrication du silicium de qualité photovoltaïque ou électronique, par craquage de trichlorosilane. Le tétrachlorosilane est ainsi valorisé par transformation en trichlorosilane et/ou dichlorosilane dans des conditions particulièrement économiques par rapport à celles connues dans la littérature.

La présente invention concerne en effet un procédé de fabrication d'hydrogéno-silane par réaction de redistribution caractérisé en ce que l'on met en réaction

– un silane représenté par la formule: $H_mSiX_{4-m}$ dans laquelle X représente un halogène ou un groupement alkoxy et m représente un nombre entier égal à 0, 1, 2 ou 3;

– un alkyle ou aryle hydrogéno-silane représenté par la formule: $R_nH_pSiX'_{4-(n+p)}$ dans laquelle X' représente un halogène ou un groupement alkoxy, R représente un ou des groupements alkyle ou aryle identiques ou différents et n et p identiques ou différents représentent des nombres entiers égaux à 1, 2 ou 3 avec $n+p < 4$;

– en présence d'un système catalytique comprenant au moins un sel minéral ionique de formule $M^+A^-$ en présence d'au moins un composé complexant susceptible de solubiliser au moins partiellement ledit sel dans le milieu réactionnel par complexation de son cation $M^+$ et de le dissocier au moins partiellement; et en ce que l'on récupère le ou les hydrogéno-silanes formés.

Les silanes que l'on met en œuvre selon le procédé de l'invention sont ceux qui ont pour formule $H_mSi\,X_{4-m}$ dans laquelle X représente un halogène ou un groupement alkoxy et m un nombre entier égal à 0, 1, 2 ou 3. Selon un mode préféré de mise en œuvre de l'invention, on utilise: le tétrachlorosilane, le trichlorosilane, le dichlorosilane ou leurs mélanges.

Les alkyles ou aryles hydrogéno-silanes que l'on met en œuvre selon le procédé de l'invention sont ceux qui ont pour formule $R_nH_pSiX'_{4-(n+p)}$ dans laquelle X' représente un halogène ou un groupement alkoxy, R représente un ou des groupements alkyle ou aryle identiques ou différents et n et p identiques ou différents représentent des nombres entiers égaux à 1, 2 ou 3 avec $n+p < 4$.

Selon un mode de mise en œuvre préféré de l'invention, on utilise le méthylsilane, le méthylchlorosilane, le diméthylchlorosilane, le méthyldichlorosilane, le diméthylsilane, le triméthylsilane, le phényldichlorosilane, le phénylchlorosilane, le diphénylchlorosilane, l'éthyldichlorosilane, le méthylphénylchlorosilane et le méthylphénylsilane ou leurs mélanges.

Les sels minéraux ioniques de formule $M^+A^-$ mis en œuvre selon l'invention ne doivent pas réagir avec les silanes présents dans le milieu réactionnel et sont notamment choisis parmi ceux dans lesquels $M^+$ représente un alcalin, un alcalino-terreux ou l'ammonium et de préférence: $Li^+$, $Na^+$, $K^+$, $Ca^{++}$, $NH^+_4$ et ceux dans lesquels $A^-$ représente un halogène, $SCN^-$, $CN^-$, $CO^{--}_3$ et de préférence: $Cl^-$, $Br^-$, $I^-$, $F^-$.

Bien que cela ne soit pas complètement démontré, il apparaît que l'invention repose sur le fait que le composé complexant le cation $M^+$ du sel minéral ionique permet la solubilisation et la dissociation au moins partielle du sel dans le milieu réactionnel, l'activité catalytique de l'anion $A^-$ étant de ce fait fortement exaltée.

Selon un premier mode de mise en œuvre particulier de l'invention, le composé complexant le cation du sel minéral ionique est un agent séquestrant de formule:

$$[N\text{–}(CHR_1\text{–}CHR_2\text{–}O\text{–}(CHR_3\text{–}CHR_4\text{–}O)_n\text{–}R_5)_3] \quad (I)$$

dans laquelle n est un nombre entier supérieur ou égal à 0 et inférieur ou égal à 10 ($0 < n < 10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_m H_{2m}-\varnothing$ ou $C_m H_{2m+1}-\varnothing-$, où m est compris entre 1 et 12 ($1 < m < 12$).

Selon un deuxième mode de mise en œuvre particulier de l'invention, le composé complexant est un polyéther macrocyclique ayant de 15 à 30 atomes dans le cycle et constitué de 4 à 10 unités –O–X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayant de 1 à 4 atomes de carbone, un des X pouvant être $-CHR_6-CHR_8-CR_9-R_7-$ quand les unités –O–X comprennent le groupement $-O-CHR_6-CHR_7-$.

Selon un troisième mode de mise en œuvre particulier de l'invention, le composé complexant est un composé macrocyclique ou bicyclique de formule générale IIa ou IIb

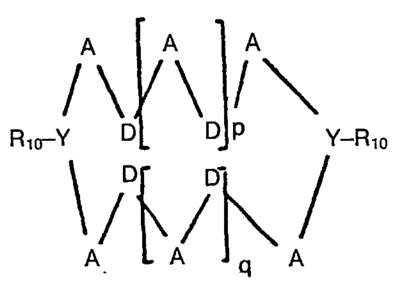

(IIa)

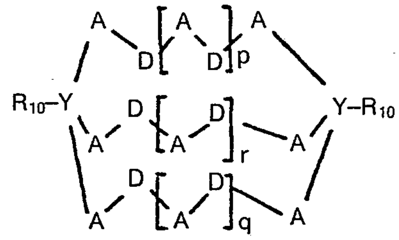

(IIb)

dans lesquelles:

– Y représente N ou P

– A représente un groupement alkylène ayant de 1 à 3 atomes de carbone,

– D représente O, S ou $N-R_{11}$ où $R_{11}$ représente un radical alkyle ayant de 1 à 6 atomes de carbone

– $R_{10}$ représente un radical alkyle ayant de 1 à 6 atomes de carbone, p, q et r identiques ou différents sont des nombres entiers compris entre 1 et 5.

Selon un quatrième mode de mise en œuvre particulier de l'invention, on utilise un mélange d'au moins deux des composés complexant définis ci-dessus.

Selon un cinquième mode de mise en œuvre particulier de l'invention, on utilise comme composé complexant les agents séquestrants, les polyéthers macrocycliques (encore nommés «Ethers Couronne») et les composés macrocycliques ou bicycliques (encore nommés «Cryptants») greffés sur des supports polymères organiques réticulés. Ces composés complexants greffés sont notamment ceux décrits dans la demande de brevet européen n° 46 706 lorsqu'il s'agit des agents séquestrants greffés et dans l'article Angew. Chem. Int. Ed. Engl. 18, 421–429 (1979) lorsqu'il s'agit des Ethers Couronne ou des Cryptants greffés.

Les agents séquestrants greffés décrits dans la demande de brevet européen n° 46 706 sont caractérisés en ce qu'ils sont constitués par un support polymère organique réticulé et par une pluralité de groupes fonctionnels, fixés sur ledit support, de formule générale:

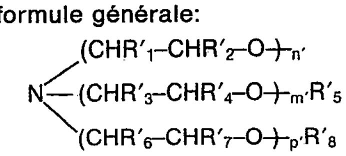

(III)

dans laquelle $R'_1$, $R'_2$, $R'_3$, $R'_4$, $R'_6$ et $R'_7$ identiques ou différents sont chacun un atome d'hydrogène ou un radical alkyle ayant de 1 à 4 atomes de carbone, $R'_5$ et $R'_8$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$ avec q' supérieur ou égal à 1 et inférieur ou égal à environ 12, et dans laquelle n', m', et p' identiques ou différents sont supérieurs ou égaux à 1 et inférieurs ou égaux à 10.

Selon un mode de réalisation préférentiel de l'invention, on utilise un agent séquestrant de formule (I) dans laquelle $R_1$, $R_2$, $R_3$ et $R_4$ représentent un atome d'hydrogène ou un radical méthyle, $R_5$ et n ayant la signification précédente.

Parmi ces derniers, on préfère encore plus particulièrement mettre en œuvre les agents séques-

trants pour lesquels n est supérieur ou égal à 0 et inférieur ou égal à 6 et pour lesquels $R_5$ représente un radical alkyle ayant de 1 à 4 atomes de carbone.

On peut citer:

- la tris(oxa-3 butyl)amine de formule: $N-(-CH_2-CH_2-O-CH_3)_3$
- la tris(dioxa-3,6 heptyl)amine de formule: $N-(-CH_2-CH_2-O-CH_2-CH_2-O-CH_3)_3$
- la tris(trioxa-3,6,9 décyl)amine de formule: $N-(-CH_2-CH_2-O-CH_2-CH_2-O-CH_2-CH_2-O-CH_3)_3$
- la tris(dioxa-3,6 octyl)amine de formule: $N-(-CH_2-CH_2-O-CH_2-CH_2-O-C_2H_5)_3$
- la tris(trioxa-3,6,9 undécyl)amine de formule: $N-(-CH_2-CH_2-O-CH_2-CH_2-O-CH_2-CH_2-O-C_2H_5)_3$
- la tris(dioxa-3,6 nonyl)amine de formule: $N-(-CH_2-CH_2-O-CH_2-CH_2-O-C_3H_7)_3$
- la tris(trioxa-3,6,9 dodécyl)amine de formule: $N-(-CH_2-CH_2-O-CH_2-CH_2-O-CH_2-CH_2-O-C_3H_7)_3$
- la tris(dioxa-3,6 décyl)amine de formule: $N-(-CH_2-CH_2-O-CH_2-CH_2-O-C_4H_9)_3$
- la tris(trioxa-3,6,9 tridécyl)amine de formule: $N-(-CH_2-CH_2-O-CH_2-CH_2-O-CH_2-CH_2-O-C_4H_9)_3$
- la tris (tetra-oxa-3,6,9,12 tridécyl)amine de formule: $N-(-CH_2-CH_2-O-(-CH_2-CH_2-O)_3-CH_3)_3$
- la tris(hexa-oxa-3,6,9,12,15,18 nonadecyl)-amine de formule: $N-(-CH_2-CH_2-O-(CH_2-CH_2-O-)_5\ CH_3)_3$
- la tris(dioxa-3,6 méthyl-4 heptyl)amine de formule: $N-(-CH_2-CH_2-OCH-(CH_3)-CH_2-O-CH_3)_3$
- la tris(dioxa-3,6 diméthyl-2,4 heptyl) amine de formule: $N-(-CH_2CH-(CH_3)-OCH(CH_3)-CH_2-O-CH_3)_3$.

Les amines utilisées sont connues en tant que telles dans l'art antérieur. C'est anisi que le brevet français 1 302 365 cite l'obtention des amines tertiaires $N-(-CH_2-CH_2-O-CH_3)_3$ et $N-(-CH_2-CH_2-O-CH_2-CH_2-O-CH_3)_3$ comme sous produits de la synthèse des amines primaires et secondaires correspondantes, ces amines primaires et secondaires étant des produits intéressants comme intermédiaires en vue de la synthèse de substances pharmaceutiques, comme inhibiteurs de corrosion, comme intermédiaires en vue de la synthèse de produits chimiques intéressants en agriculture et comme émulsifiants. Il n'est pas inutile de souligner que le domaine d'application des composés obtenus dans le brevet 1 302 365 précité simultanément aux amines utilisées dans le procédé objet de la présente demande est totalement étranger au domaine de l'invention.

Les polyéthers macrocycliques qui peuvent être mis en œuvre dans le procédé selon l'invention sont connus sous l'appellation générale d'«éthers couronnes» et sont décrits dans le brevet français 6 943 879 publié sous le numéro 2 026 481.

On peut citer comme exemples d'éthers couronnes pouvant être utilisés selon l'invention:

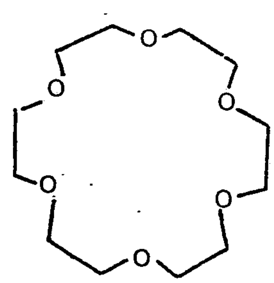

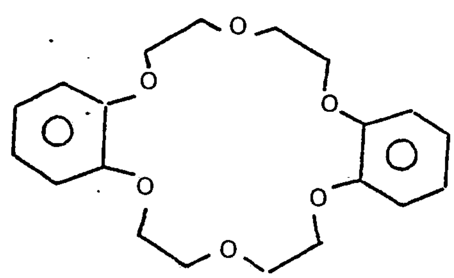

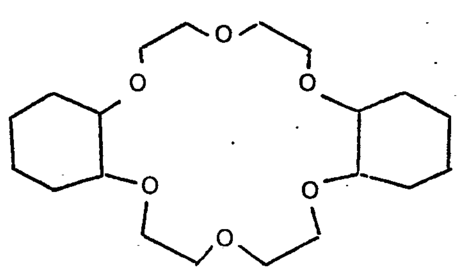

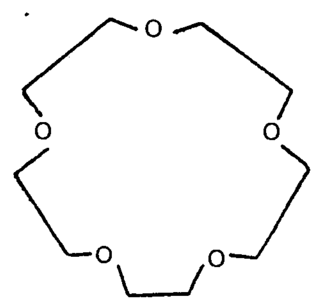

Les composés macrocycliques et bicycliques sont décrits dans le brevet français 7 021 079 publié sous le numéro 2 052 947. On peut citer comme exemples de tels composés concernant la mise en œuvre du procédé selon l'invention:

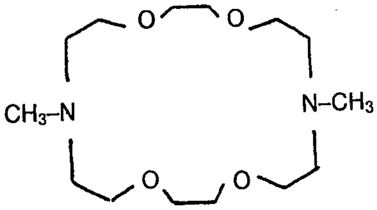

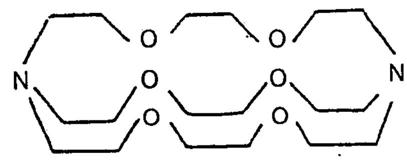

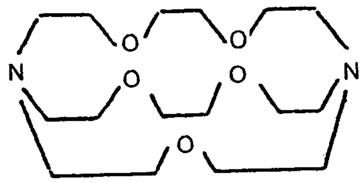

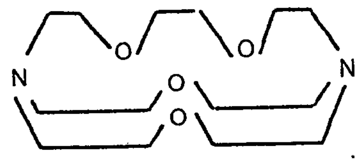

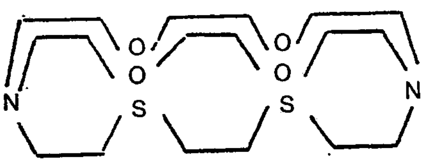

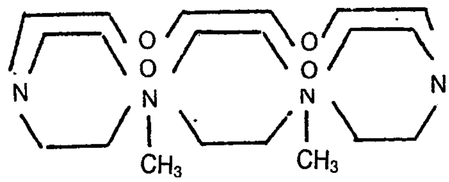

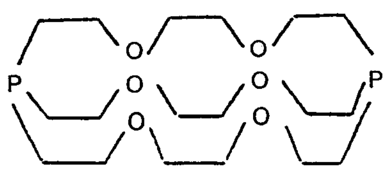

Selon un autre mode de réalisation préférentiel de l'invention, on utilise un agent séquestrant supporté constitué par un support polymère organique réticulé et par une pluralité de groupes fonctionnels fixés sur ledit support, de formule générale (III) dans laquelle $R'_1$, $R'_2$, $R'_3$, $R'_4$, $R'_6$, et $R'_7$ identiques ou différents, représentent un atome d'hydrogène ou le radical méthyle et $R'_5$ et $R'_8$ identiques ou différents représentent un atome d'hydrogène ou un radical alkyle ayant de 1 à 4 atomes de carbone. Selon un autre mode de réalisation préférentiel de l'invention, n', m' et p' identiques ou différents sont supérieurs ou égaux à 1 et inférieurs ou égaux à 6.

On peut citer comme exemples de groupes fonctionnels, les groupes de formules suivantes:

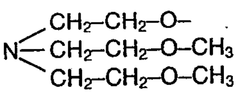

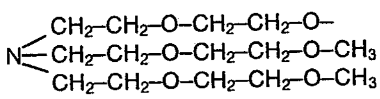

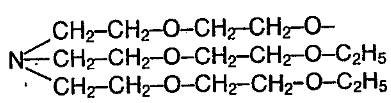

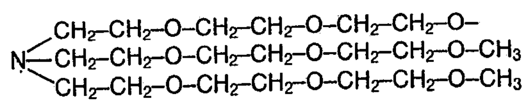

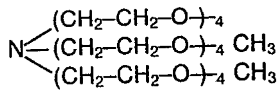

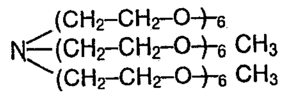

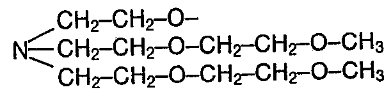

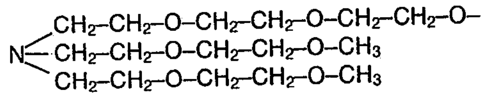

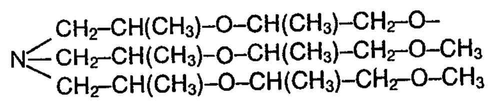

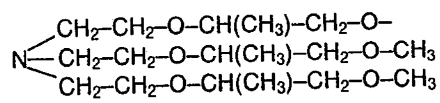

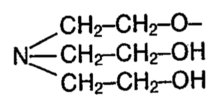

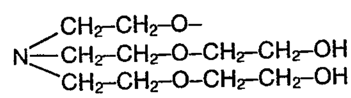

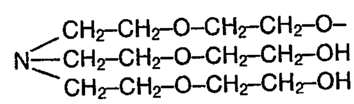

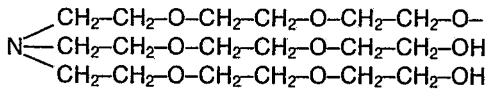

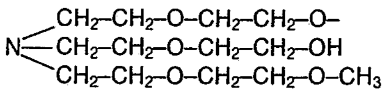

Le support peut dériver de tout polymère organique réticulé comportant des groupements substituables par les groupements fonctionnels de formule (III).

On peut citer comme exemples de polymères organiques adaptés à la présente invention, les polymères dérivés de composés vinylaromatiques tels que le styrène, le méthylstyrène et les copolymères de composés vinylaromatiques et de diènes conjugués en $C_4$–$C_6$ tels que les copolymères du styrène et de butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (III) greffés sur le polystyrène soient actifs. Pour cela, il faut que les molécules du solvant dans lequel l'agent séquestrant supporté sera mis en œuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10%. Encore plus préférentiellement, le taux de réticulation est inférieur à 5% environ.

Le groupement substituable est de préférence le chlore ou le brome du radical chloro ou bromo méthyl $-CH_2Cl$ ou $-CH_2Br$ fixé sur le noyau benzénique du polystyrène.

On préfère tout particulièrement que le pourcentage de noyaux benzéniques du polystyrène portant un groupement fonctionnel soit supérieur à 5%. Encore plus préférentiellement, ce pourcentage est supérieur à 10%.

On peut représenter les agents séquestrants supportés préférés par la formule suivante:

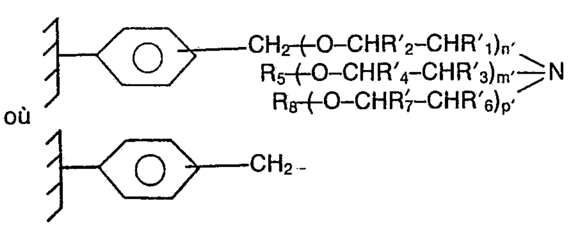

où

dérive du polystyrène chloro ou bromo méthylé réticulé par le divinylbenzène de formule:

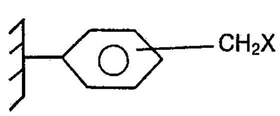

où X représente Cl ou Br.

Selon un autre mode de réalisation préférentiel de l'invention, on utilise un polyéther macrocyclique ou un composé macrocyclique ou bicyclique greffé sur un polymère organique réticulé qui est constitué d'un polystyrène obtenu par réaction du dérivé aminé approprié, du polyéther macrocyclique ou du composé macrocyclique ou bicyclique avec un polystyrène chlorométhylé. On peut représenter ces produits supportés préférés par les formules suivantes:

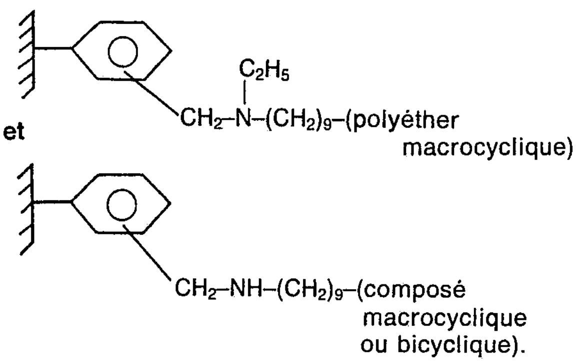

et

Le procédé selon l'invention peut être mis en œuvre en présence ou en l'absence de solvant. Dans ce dernier cas, ce sont les silanes de départ qui peuvent jouer le rôle de solvant. Quand on utilise un tiers solvant, ce dernier doit répondre à un certain nombre de conditions: il faut qu'il solubilise les silanes de départ; il faut aussi qu'il soit inerte chimiquement vis-à-vis des silanes introduits ou formés.

On choisit, de préférence, un solvant comme par exemple, le chlorobenzène, l'orthodichlorobenzène, le benzène, le toluène, le cyclohexane, l'heptane, le dichloroéthane, le chlorure de méthylène, le dichlorobenzène, le tétrahydrofurane, le dioxane, le diméthoxyéthane.

Le choix du composé complexant le plus adapté à la mise en œuvre du procédé selon l'invention se fait, en outre, en tenant compte de la taille du cation du sel minéral ionique. Plus la taille du cation sera importante, plus le nombre d'atomes d'oxygène contenus dans la molécule du composé complexant devra être élevé.

Le procédé selon l'invention est mis en œuvre à une température comprise entre −30 °C et la température d'ébullition du milieu réactionnel.

On opère de préférence à la pression atmosphérique. Bien entendu, des pressions supérieures ou inférieures à la pression atmosphérique ne sont pas exclues.

On utilise le composé complexant en quantité telle que le rapport molaire du composé complexant (ou des groupements actifs de celui-ci lorsqu'il est supporté) au sel minéral ionique est, de préférence, compris entre 0,05 et 100. Encore plus préférentiellement, ce rapport est compris entre 0,5 et 5.

Le rapport molaire du sel minéral ionique aux silanes de départ (silane et alkyle ou aryle hydrogéno-silane) est compris de préférence entre

10 et 0,0001. Encore plus préférentiellement, il est compris entre 0,5 et 0,001.

Le rapport molaire entre le silane et l'alkyle ou aryle hydrogéno-silane est, de préférence, compris entre 0,1 et 5, si ce rapport est élevé, on limite la réaction à la formation de silanes peu hydrogénés, par contre si ce rapport est faible, on peut poursuivre la réaction jusqu'à la formation de silanes plus hydrogénés dans certains cas jusqu'à $SiH_4$.

Le rapport molaire entre le solvant et les silanes de départ est compris entre 0 et 100 et de préférence entre 0 et 10.

Le ou les hydrogéno-silanes obtenus peuvent être séparés au fur et à mesure de leur formation s'ils sont peu solubles dans le milieu réactionnel et suffisamment volatils; on peut aussi séparer en fin de réaction les différents silanes obtenus (le ou les hydrogéno-silanes et le ou les alkyle ou aryle silanes formés) ainsi que les silanes n'ayant pas réagi selon les techniques bien connues de l'homme de l'art comme, par exemple, par distillation, solubilisation sélective, etc...

Il est à noter que le système catalytique mis en œuvre selon l'invention catalyse également et simultanément les réactions de dismutation des silanes comportant au moins une liaison Si–H (ainsi que cela a été décrit par la demanderesse dans sa demande de brevet français n° 8 303 089); ainsi la réaction de redistribution qui vient d'être décrite suivie des réactions de dismutations simultanées des silanes présents comportant au moins une liaison Si–H peut conduire à l'obtention de mélanges plus ou moins complexes de silanes. Par exemple, la réaction de redistribution qui est écrite globalement

$$HSiCl_3 + 3CH_3HSiCl_2 \rightarrow SiH_4 + 3CH_3SiCl_3$$

correspond en fait à l'addition des réactions de redistribution

$$CH_3HSiCl_2 + HSiCl_3 \rightarrow CH_3SiCl_3 + H_2SiCl_2$$

et de dismutation $3H_2SiCl_2 \rightarrow SiH_4 + 2HSiCl_3$. Dans le cas où le silane mis en œuvre pour la réaction de redistribution est le tétrachlorosilane qui ne se dismute pas (il ne contient pas de liaisons Si–H), si l'on veut éviter la dismutation du $H_2SiCl_2$ formé par la réaction de redistribution, il convient de le récupérer au fur et à mesure de sa formation.

Les composés complexants greffés mis en œuvre selon l'invention permettent de travailler de préférence en continu sur colonne, alors que les composés complexants non greffés permettent de travailler en continu ou en discontinu.

Les agents séquestrants de formule (I) utilisés dans le procédé selon l'invention peuvent être préparés comme décrit dans la demande de brevet français publiée sous le n° 2 450 120.

La présente invention permet ainsi d'opérer la fabrication d'hydrogéno-silanes selon une nouvelle réaction de redistribution avec un taux de transformation exceptionnel et en mettant en œuvre de faibles quantités de système catalytique.

D'autres caractéristiques et avantages de l'invention apparaîtront plus clairement à la lecture des exemples qui vont suivre.

Exemple n° 1

Dans un flacon de 8 ml muni d'un septum en Viton® nous introduisons:

- 19,7 $10^{-3}$ moles de chlorobenzène (solvant), soit 2,219 g,
- 0,54 $10^{-3}$ moles de tris(dioxa 3,6 heptyl) amine soit 0,173 g. Ce composé complexant sera, dans les exemples suivants, symbolisé par TDA 1.
- 0,48 $10^{-3}$ moles de LiCl, comme sel minéral ionique, soit 20,2 mg.

Après avoir porté le flacon à la température de 30 °C, nous introduisons à l'aide d'une seringue:

- 4,05 $10^{-3}$ moles de $CH_3SiHCl_2$, soit 0,466 g,
- 5,90 $10^{-3}$ moles de $HSiCl_3$, soit 0,799 g.

La réaction de redistribution entre $CH_3SiHCl_2$ et $HSiCl_3$ est suivie par analyses périodiques du milieu réactionnel en chromatographie phase gazeuse.

Après 3 heures de réaction la composition est la suivante (pourcentages massiques):

| | |
|---|---|
| $SiH_4$ | 0% |
| $H_3SiCl$ | 0% |
| $CH_3SiH_2Cl$ | 0% |
| $H_2SiCl_2$ | 4,12% |
| $HSiCl_3$ | 15,65% |
| $CH_3SiHCl_2$ | 8,44% |
| $SiCl_4$ | 0,68% |
| $CH_3SiCl_3$ | 5,49% |
| $C_6H_5Cl$ | 60,34% |

ce qui correspond à un taux de transformation de $HSiCl_3$ de 28% et de $CH_3SiHCl_2$ de 33%.

Exemple n° 2

Dans des conditions opératoires identiques à celles de l'exemple n° 1, nous effectuons le même essai mais en augmentant les rapports

$$\frac{\text{TDA 1} + \text{LiCl}}{\text{HSiCl3} + \text{CH3SiHCl}} \text{ et } \frac{\text{CH3SiHCl2}}{\text{HSiCl3}}:$$

| | | |
|---|---|---|
| Chlorobenzène: | 10,11 g | (89,9 $10^{-3}$ moles) |
| TDA 1: | 2,019 g | (6,24 $10^{-3}$ moles) |
| LiCl: | 0,255 g | (6,02 $10^{-3}$ moles) |
| $HSiCl_3$: | 0,467 g | (3,45 $10^{-3}$ moles) |
| $CH_3SiHCl_2$: | 1,644 g | (14,3 $10^{-3}$ moles) |

Après 1 h 10 mn de réaction, la composition est la suivante:

| | |
|---|---|
| $SiH_4$ | 0,09% |
| $H_3SiCl$ | 0,30% |
| $CH_3SiH_2Cl$ | 0,22% |
| $H_2SiCl_2$ | 0,98% |
| $HSiCl_3$ | 0,93% |
| $CH_3SiHCl_2$ | 7,62% |
| $SiCl_4$ | 0% |
| $CH_3SiCl_3$ | 4,43% |
| $C_6H_5Cl$ | 69,74% |

Ce qui correspond à un taux de transformation de $HSiCl_3$ de 71% et de $CH_3SiHCl_2$ de 33%.

Il est à noter que, dans cet exemple, l'augmentation du rapport molaire

$$\frac{CH3SiHCl2}{HSiCl3}$$

a permis d'obtenir des silanes plus hydrogènés ($H_3SiCl$ et $SiH_4$) par réaction entre $H_2SiCl_2$ formé et l'alkyle hydrogéno-silane de départ ainsi que d'éliminer totalement la formation de $SiCl_4$. A ces réactions peuvent s'ajouter celles de dismutation des différents silanes présents dans le milieu réactionnel, ces réactions étant catalysées par les systèmes catalytiques de l'invention.

La réaction principale suivie des réactions qui viennent d'être mentionnées peuvent donc conduire à l'obtention de mélanges plus ou moins complexes de silanes.

Exemple n° 3

Dans des conditions opératoires identiques à celles des exemples précédents, nous effectuons un essai en remplaçant $HSiCl_3$ par $SiCl_4$.

| | | |
|---|---|---|
| Chlorobenzène: | 2,262 g | (20,1 $10^{-3}$ moles) |
| TDA 1: | 0,180 g | (0,56 $10^{-3}$ moles) |
| LiCl: | 19,6 mg | (0,46 $10^{-3}$ moles) |
| $SiCl_4$: | 0,540 g | (3,18 $10^{-3}$ moles) |
| $CH_3SiHCl_2$: | 0,663 g | (5,76 $10^{-3}$ moles) |

Après 25 heures de réaction, la composition est la suivante:

| | |
|---|---|
| $SiH_4$ | 0% |
| $H_3SiCl$ | 0% |
| $CH_3SiH_2Cl$ | 0% |
| $H_2SiCl_2$ | 0,22% |
| $HSiCl_3$ | 6,88% |
| $CH_3SiHCl_2$ | 11,74% |
| $SiCl_4$ | 5,75% |
| $CH_3SiCl_3$ | 8,24% |
| $C_6H_5Cl$ | 61,71% |

Ce qui correspond à un taux de transformation de $SiCl_4$ de 61% et de $CH_3SiHCl_2$ de 35%.

L'équilibre thermodynamique est atteint en 50 heures environ, la composition est alors la suivante:

| | |
|---|---|
| $SiH_4$ | 0,03% |
| $H_3SiCl$ | 0,18% |
| $CH_3SiH_2Cl$ | 0,04% |
| $H_2SiCl_2$ | 2,42% |
| $HSiCl_3$ | 7,76% |
| $CH_3SiHCl_2$ | 4,39% |
| $SiCl_4$ | 0,28% |
| $CH_3SiCl_3$ | 17,70% |
| $C_6H_5Cl$ | 61,71% |

Ce qui correspond à un taux de transformation de $SiCl_4$ de 98% et de $CH_3SiHCl_2$ de 76%.

Exemple n° 4

Nous reproduisons dans cet exemple l'essai décrit dans l'exemple n° 3 mais en remplaçant le sel LiCl par LiBr.

| | | |
|---|---|---|
| Chlorobenzène: | 2,248 g | (20,0 $10^{-3}$ moles) |
| TDA 1: | 0,270 g | (0,84 $10^{-3}$ moles) |
| LiBr: | 39,7 mg | (0,46 $10^{-3}$ moles) |
| $SiCl_4$: | 0,488 g | (2,87 $10^{-3}$ moles) |
| $CH_3SiHCl_2$: | 0,686 g | (5,96 $10^{-3}$ moles) |

Après 6 h de réaction, la composition est la suivante:

| | |
|---|---|
| $SiH_4$ | 0% |
| $H_3SiCl$ | 0% |
| $CH_3SiH_2Cl$ | 0,02% |
| $H_2SiCl_2$ | 0,05% |
| $HSiCl_3$ | 3,38% |
| $CH_3SiHCl_2$ | 15,32% |
| $SiCl_4$ | 8,74% |
| $CH_3SiCl_3$ | 3,93% |
| $C_6H_5Cl$ | 60,24% |

Ce qui correspond à un taux de transformation de $SiCl_4$ de 33% et de $CH_3SiHCl_2$ de 17%.

L'équilibre thermodynamique est atteint en 22 heures environ, la composition est alors la suivante:

| | |
|---|---|
| $SiH_4$ | 0,03% |
| $H_3SiCl$ | 0,25% |
| $CH_3SiH_2Cl$ | 0,06% |
| $H_2SiCl_2$ | 2,84% |
| $HSiCl_3$ | 5,74% |
| $CH_3SiHCl_2$ | 5,06% |
| $SiCl_4$ | 0,27% |
| $CH_3SiCl_3$ | 17,19% |
| $C_6H_5Cl$ | 60,24% |

Ce qui correspond à un taux de transformation de $SiCl_4$ de 98% et de $CH_3SiHCl_2$ de 72%.

Exemple n° 5

Dans des conditions opératoires identiques à celles des exemples précédents, nous effectuons un essai avec $CH_3SiHCl_2$ et $H_2SiCl_2$:

| | | |
|---|---|---|
| Chlorobenzène: | 2,264 g | (20,1 $10^{-3}$ moles) |
| TDA 1: | 0,185 g | (0,57 $10^{-3}$ moles) |
| LiCl: | 22,5 mg | (0,53 $10^{-3}$ moles) |
| $H_2SiCl_2$: | 0,537 g | (5,32 $10^{-3}$ moles) |
| $CH_3SiHCl_2$: | 0,535 g | (4,65 $10^{-3}$ moles) |

Après 3 h de réaction, la composition est la suivante:

| | |
|---|---|
| $SiH_4$ | 0,73% |
| $H_3SiCl$ | 2,37% |
| $CH_3SiH_2Cl$ | 0,23% |
| $H_2SiCl_2$ | 5,99% |
| $HSiCl_3$ | 4,40% |
| $CH_3SiHCl_2$ | 8,96% |
| $SiCl_4$ | 0,04% |
| $CH_3SiCl_3$ | 7,55% |
| $C_6H_5Cl$ | 63,90% |

Ce qui correspond à un taux de transformation de $H_2SiCl_2$ de 61% et de $CH_3SiHCl_2$ de 41%.

A la réaction entre $H_2SiCl_2$ et $CH_3SiHCl_2$, s'ajoute, dans cet essai, la réaction de dismutation de $H_2SiCl_2$.

Exemple n° 6

Nous reproduisons dans cet exemple l'essai décrit dans l'exemple n° 1 mais en remplaçant le système catalytique TDA 1 + LiCl par le système TDA 1 + LiBr:

| | | |
|---|---|---|
| Chlorobenzène: | 2,475 g | (22,0 $10^{-3}$ moles) |
| TDA 1: | 0,210 g | (0,65 $10^{-3}$ moles) |
| LiBr: | 41,0 mg | (0,47 $10^{-3}$ moles) |
| $HSiCl_3$: | 0,704 g | (5,20 $10^{-3}$ moles) |
| $CH_3SiHCl_2$: | 0,909 g | (7,90 $10^{-3}$ moles) |

Après 5 heures de réaction, la composition est la suivante:

| | |
|---|---|
| $SiH_4$ | 0,06% |
| $H_3SiCl$ | 0,12% |
| $CH_3SiH_2Cl$ | 0,13% |
| $H_2SiCl_2$ | 4,00% |
| $HSiCl_3$ | 10,11% |
| $CH_3SiHCl_2$ | 15,16% |
| $SiCl_4$ | 0,31% |
| $CH_3SiCl_3$ | 7,27% |
| $C_6H_5Cl$ | 57,04% |

ce qui correspond à un taux de transformation de $HSiCl_3$ de 38% et de $CH_3SiHCl_2$ de 28%.

Exemple n° 7

Nous utilisons, dans cet exemple, le système catalytique TDA 1+LiF, toujours en présence de $C_6H_5Cl$ comme solvant:

| | | |
|---|---|---|
| Chlorobenzène: | 3,092 g | (27,5 $10^{-3}$ moles) |
| TDA 1: | 0,167 g | (0,52 $10^{-3}$ moles) |
| LiF: | 13,7 mg | (0,53 $10^{-3}$ moles) |
| $HSiCl_3$: | 0,538 g | (3,97 $10^{-3}$ moles) |
| $CH_3SiHCl_2$: | 0,910 g | (7,91 $10^{-3}$ moles) |

Après 5 heures de réaction, la composition est la suivante:

| | |
|---|---|
| $SiH_4$ | 0,05% |
| $H_3SiCl$ | 0,10% |
| $CH_3SiH_2Cl$ | 0,15% |
| $H_2SiCl_2$ | 3,42% |
| $HSiCl_3$ | 6,28% |
| $CH_3SiHCl_2$ | 14,18% |
| $SiCl_4$ | 0,14% |
| $CH_3SiCl_3$ | 6,33% |
| $C_6H_5Cl$ | 65,50% |

ce qui correspond à un taux de transformation de $HSiCl_3$ de 45% et de $CH_3SiHCl_2$ de 26%.

Après 24 heures (Equilibre atteint), la composition est la suivante:

| | |
|---|---|
| $SiH_4$ | 0,34% |
| $H_3SiCl$ | 0,99% |
| $CH_3SiH_2Cl$ | 0,24% |
| $H_2SiCl_2$ | 3,53% |
| $HSiCl_3$ | 3,19% |
| $CH_3SiHCl_2$ | 7,53% |
| $SiCl_4$ | 0,04% |
| $CH_3SiCl_3$ | 14,82% |
| $C_6H_5Cl$ | 65,50% |

ce qui correspond à un taux de transformation de $HSiCl_3$ de 72% et de $CH_3SiHCl_2$ de 61%.

Exemple n° 8

Tojours dans les mêmes conditions opératoires, nous utilisons cette fois le système catalytique TDA 1+Na I:

| | | |
|---|---|---|
| Chlorobenzène: | 1,774 g | (15,8 $10^{-3}$ moles) |
| TDA 1: | 1,156 g | (3,57 $10^{-3}$ moles) |
| NaI: | 0,188 g | (1,25 $10^{-3}$ moles) |
| $HSiCl_3$: | 0,480 g | (3,54 $10^{-3}$ moles) |
| $CH_3SiHCl_2$: | 1,153 g | (10,0 $10^{-3}$ moles) |

Après 24 heures de réaction, la composition est la suivante:

| | |
|---|---|
| $SiH_4$ | 0,16% |
| $H_3SiCl$ | 0,47% |
| $CH_3SiH_2Cl$ | 0,38% |
| $H_2SiCl_2$ | 4,57% |
| $HSiCl_3$ | 6,28% |
| $CH_3SiHCl_2$ | 24,25% |
| $SiCl_4$ | 0,05% |
| $CH_3SiCl_3$ | 11,76% |
| $C_6H_5Cl$ | 52,08% |

ce qui correspond à un taux de transformation de $HSiCl_3$ de 55% et de $CH_3SiHCl_2$ de 27%.

Exemple n° 9

Nous utilisons, dans cet exemple, le système catalytique TDA 1+$NH_4Cl$:

| | | |
|---|---|---|
| Chlorobenzène: | 2,146 g | (19,1 $10^{-3}$ moles) |
| TDA 1: | 1,154 g | (3,60 $10^{-3}$ moles) |
| $NH_4Cl$: | 66 mg | (1,22 $10^{-3}$ moles) |
| $HSiCl_3$: | 0,767 g | (5,66 $10^{-3}$ moles) |
| $CH_3SiHCl_2$: | 1,085 g | (9,43 $10^{-3}$ moles) |

Après 4 heures de réaction, la composition est la suivante:

| | |
|---|---|
| $SiH_4$ | 0,33% |
| $H_3SiCl$ | 1,05% |
| $CH_3SiH_2Cl$ | 0,24% |
| $H_2SiCl_2$ | 7,00% |
| $HSiCl_3$ | 6,17% |
| $CH_3SiHCl_2$ | 11,39% |
| $SiCl_4$ | 0,12% |
| $CH_3SiCl_3$ | 20,01% |
| $C_6H_5Cl$ | 53,69% |

ce qui correspond à un taux de transformation de $HSiCl_3$ de 68% et de $CH_3SiHCl_2$ de 58%.

Exemple n° 10

Nous reproduisons, dans cet exemple, l'essai décrit dans l'exemple n° 7, effectué avec le mélange catalytique TDA1+LiF, mais avec le toluène comme solvant à la place du chlorobenzène:

| | | |
|---|---|---|
| Toluène: | 2,369 g | (25,7 $10^{-3}$ moles) |
| TDA 1: | 0,169 g | (0,52 $10^{-3}$ moles) |
| LiF: | 13,0 mg | (0,50 $10^{-3}$ moles) |
| $HSiCl_3$: | 0,524 g | (3,87 $10^{-3}$ moles) |
| $CH_3SiHCl_2$: | 0,782 g | (6,80 $10^{-3}$ moles) |

Après 10 heures de réaction, la composition est la suivante:

| | |
|---|---|
| $SiH_4$ | 0,02% |
| $H_3SiCl$ | 0,07% |
| $CH_3SiH_2Cl$ | 0,13% |
| $H_2SiCl_2$ | 3,40% |
| $HSiCl_3$ | 8,53% |
| $CH_3SiHCl_2$ | 15,74% |
| $SiCl_4$ | 0,31% |
| $CH_3SiCl_3$ | 5,66% |
| $C_6H_5CH_3$ | 61,41% |

ce qui correspond à un taux de transformation de $HSiCl_3$ de 37% et de $CH_3SiHCl_2$ de 22%.

Exemple n° 11

Nous effectuons un essai en utilisant le mélange catalytique TDA1+LiBr, toujours en présence de toluène comme solvant:

| | | |
|---|---|---|
| Toluène: | 1,184 g | (12,8 $10^{-3}$ moles) |
| TDA 1: | 1,058 g | (3,27 $10^{-3}$ moles) |
| LiBr: | 94,8 mg | (1,09 $10^{-3}$ moles) |
| $HSiCl_3$: | 0,654 g | (4,83 $10^{-3}$ moles) |
| $CH_3SiHCl_2$: | 1,520 g | (9,70 $10^{-3}$ moles) |

Après 5 heures de réaction, la composition est la suivante:

| | |
|---|---|
| $SiH_4$ | 0,16% |
| $H_3SiCl$ | 1,08% |

| | |
|---|---|
| $CH_3SiH_2Cl$ | 0,14% |
| $H_2SiCl_2$ | 6,16% |
| $HSiCl_3$ | 11,00% |
| $CH_3SiHCl_2$ | 24,88% |
| $SiCl_4$ | 0% |
| $CH_3SiCl_3$ | 16,50% |
| $C_6H_5CH_3$ | 40,08% |

ce qui correspond à un taux de transformation de $HSiCl_3$ de 50% et de $CH_3SiHCl_2$ de 25%.

Exemple n° 12

Exemple comparable au précédent mais en utilisant de l'heptone comme solvant:

| | | |
|---|---|---|
| Heptone: | 1,340 g | (13,5 $10^{-3}$ moles) |
| TDA 1: | 1,147 g | (3,54 $10^{-3}$ moles) |
| LiBr: | 0,103 g | (1,14 $10^{-3}$ moles) |
| $HSiCl_3$: | 0,765 g | (5,65 $10^{-3}$ moles) |
| $CH_3SiHCl_2$: | 1,224 g | (7,81 $10^{-3}$ moles) |

Après 27 heures de réaction, la composition est la suivante:

| | |
|---|---|
| $SiH_4$ | 0,27% |
| $H_3SiCl$ | 1,11% |
| $CH_3SiH_2Cl$ | 0,32% |
| $H_2SiCl_2$ | 6,87% |
| $HSiCl_3$ | 12,77% |
| $CH_3SiHCl_2$ | 14,43% |
| $SiCl_4$ | 0,06% |
| $CH_3SiCl_3$ | 19,41% |
| $C_7H_{16}$ | 44,76% |

ce qui correspond à un taux de transformation de $HSiCl_3$ de 50% et de $CH_3SiHCl_2$ de 52%.

Exemple n° 13

Exemple comparable aux précédents mais en utilisant cette fois le dioxane comme solvant:

| | | |
|---|---|---|
| Dioxane: | 1,350 g | (15,3 $10^{-3}$ moles) |
| TDA 1: | 1,134 g | (3,51 $10^{-3}$ moles) |
| LiBr: | 0,102 g | (1,17 $10^{-3}$ moles) |
| $HSiCl_3$: | 0,597 g | (4,41 $10^{-3}$ moles) |
| $CH_3SiHCl_2$: | 1,352 g | (8,63 $10^{-3}$ moles) |

Après 2 heures de réaction, la composition est la suivante:

| | |
|---|---|
| $SiH_4$ | 0,04% |
| $H_3SiCl$ | 0,32% |
| $CH_3SiH_2Cl$ | 0,08% |
| $H_2SiCl_2$ | 2,31% |
| $HSiCl_3$ | 15,83% |
| $CH_3SiHCl_2$ | 29,78% |
| $SiCl_4$ | 0,58% |
| $CH_3SiCl_3$ | 5,09% |
| $C_4H_8O_2$ | 45,97% |

ce qui correspond à un taux de transformation de $HSiCl_3$ de 22% et de $CH_3SiHCl_2$ de 12%.

Exemple n° 14

Nous effectuons, dans cet exemple, un essai de réaction de redistribution entre $HSiCl_3$ et $CH_3SiHCl_2$, toujours en présence de TDA1+LiBr, mais sans solvant:

| | | |
|---|---|---|
| TDA 1: | 0,327 g | (1,01 $10^{-3}$ moles) |
| LiBr: | 77,0 mg | (0,86 $10^{-3}$ moles) |
| $HSiCl_3$: | 0,867 g | (6,40 $10^{-3}$ moles) |
| $CH_3SiHCl_2$: | 1,791 g | (15,6 $10^{-3}$ moles) |

Après 4 heures de réaction, la composition est la suivante:

| | |
|---|---|
| $SiH_4$ | 0,39% |
| $H_3SiCl$ | 1,09% |
| $CH_3SiH_2Cl$ | 0,63% |
| $H_2SiCl_2$ | 9,93% |
| $HSiCl_3$ | 10,88% |
| $CH_3SiHCl_2$ | 37,68% |
| $SiCl_4$ | 0,33% |
| $CH_3SiCl_3$ | 25,87% |

ce qui correspond à un taux de transformation de $HSiCl_3$ de 62% et de $CH_3SiHCl_2$ de 38%.

Exemple n° 15

Dans des conditions opératoires identiques à celles des essais précédents, nous effectuons un essai de réaction entre $HSiCl_3$ et $CH_3SiHCl_2$, en présence de tris(dioxa 3,6 octyl) amine (TDA 2) et de LiBr comme système catalytique et de chlorobenzène comme solvant:

| | | |
|---|---|---|
| Chlorobenzène: | 1,931 g | (17,2 $10^{-3}$ moles) |
| TDA 2: | 1,303 g | (3,57 $10^{-3}$ moles) |
| LiBr: | 0,116 g | (1,33 $10^{-3}$ moles) |
| $HSiCl_3$: | 0,748 g | (5,52 $10^{-3}$ moles) |
| $CH_3SiHCl_2$: | 1,326 g | (11,5 $10^{-3}$ moles) |

Après 1 heure 30 de réaction, la composition est la suivante:

| | |
|---|---|
| $SiH_4$ | 0,28% |
| $H_3SiCl$ | 1,16% |
| $CH_3SiH_2Cl$ | 0,38% |
| $H_2SiCl_2$ | 6,63% |
| $HSiCl_3$ | 6,19% |
| $CH_3SiHCl_2$ | 17,52% |
| $SiCl_4$ | 0,08% |
| $CH_3SiCl_3$ | 19,56% |
| $C_6H_5Cl$ | 48,20% |

ce qui correspond à un taux de transformation de $HSiCl_3$ de 67% et de $CH_3SiHCl_2$ de 47%.

Exemple n° 16

Exemple comparable au précédent, mais en utilisant cette fois la tris(dioxa 3,6 décyl) amine (TDA 4) comme agent complexant:

| | | |
|---|---|---|
| Chlorobenzène: | 2,054 g | (18,3 $10^{-3}$ moles) |
| TDA 4: | 1,673 g | (3,73 $10^{-3}$ moles) |
| LiBr: | 98,8 mg | (1,14 $10^{-3}$ moles) |
| $HSiCl_3$: | 0,665 g | (4,91 $10^{-3}$ moles) |
| $CH_3SiHCl_2$: | 1,271 g | (11,1 $10^{-3}$ moles) |

Après 1 heure 40 de réaction, la composition est la suivante:

| | |
|---|---|
| $SiH_4$ | 0,20% |
| $H_3SiCl$ | 0,70% |
| $CH_3SiH_2Cl$ | 0,34% |
| $H_2SiCl_2$ | 5,11% |
| $HSiCl_3$ | 7,43% |
| $CH_3SiHCl_2$ | 20,56% |
| $SiCl_4$ | 0,13% |
| $CH_3SiCl_3$ | 14,05% |
| $C_6H_5Cl$ | 51,48% |

ce qui correspond à un taux de transformation de $HSiCl_3$ de 55% et de $CH_3SiHCl_2$ de 35%.

Exemple n° 17

L'essai décrit dans cet exemple a été effectué en présence de tris(trioxa 3,6,9 décyl) amine (TTA) comme agent complexant et de KCl comme sel ionique:

| | | |
|---|---|---|
| Chlorobenzène: | 2,303 g | (20,5 $10^{-3}$ moles) |
| TTA 1: | 1,591 g | (3,50 $10^{-3}$ moles) |
| KCl: | 0,100 g | (1,34 $10^{-3}$ moles) |
| $HSiCl_3$: | 0,662 g | (4,88 $10^{-3}$ moles) |
| $CH_3SiHCl_2$: | 1,376 g | (12,0 $10^{-3}$ moles) |

Après 2 heures 30 de réaction, la composition est la suivante:

| | |
|---|---|
| $SiH_4$ | 0,09% |
| $H_3SiCl$ | 0,46% |
| $CH_3SiH_2Cl$ | 0,24% |
| $H_2SiCl_2$ | 5,33% |
| $HSiCl_3$ | 6,52% |
| $CH_3SiHCl_2$ | 22,61% |
| $SiCl_4$ | 0,31% |
| $CH_3SiCl_3$ | 11,37% |
| $C_6H_5Cl$ | 53,07% |

ce qui correspond à un taux de transformation de $HSiCl_3$ de 57% et de $CH_3SiHCl_2$ de 29%.

Exemple n° 18

Nous avons utilisé, dans cet exemple, le système catalytique tris(trioxa 3,6,9 undécyl) amine (TTA 2)+KCl comme mélange catalytique:

Essai comparable au précédent, en changeant de nouveau l'agent complexant:

| | | |
|---|---|---|
| Chlorobenzène: | 2,114 g | (18,8 $10^{-3}$ moles) |
| TTA 2: | 1,801 g | (3,62 $10^{-3}$ moles) |
| KCl: | 97 mg | (1,30 $10^{-3}$ moles) |
| $HSiCl_3$: | 0,603 g | (4,45 $10^{-3}$ moles) |
| $CH_3SiHCl_2$: | 1,519 g | (13,2 $10^{-3}$ moles) |

Après 2 heures 40 de réaction, la composition est la suivante:

| | |
|---|---|
| $SiH_4$ | 0,36% |
| $H_3SiCl$ | 0,80% |
| $CH_3SiH_2Cl$ | 0,67% |
| $H_2SiCl_2$ | 4,03% |
| $HSiCl_3$ | 5,63% |
| $CH_3SiHCl_2$ | 22,81% |
| $SiCl_4$ | 0,08% |
| $CH_3SiCl_3$ | 15,71% |
| $C_6H_5Cl$ | 49,91% |

ce qui correspond à un taux de transformation de $HSiCl_3$ de 60% et de $CH_3SiHCl_2$ de 36%.

Exemple n° 19

Nous effectuons, dans cet exemple, un essai de redistribution entre $CH_3SiHCl_2$ et $HSiCl_3$, en présence de tris (trioxa 3,6,9 undécyl) amine (TTA 2), greffée sur résine polystyrène:

| | | |
|---|---|---|
| Chlorobenzène: | 5,242 g | (46,6 $10^{-3}$ moles) |
| TTA 2 greffée: | 1,897 g | (3,39 $10^{-3}$ moles) |
| LiCl: | 54,4 mg | (1,28 $10^{-3}$ moles) |
| $HSiCl_3$: | 0,649 g | (4,78 $10^{-3}$ moles) |
| $CH_3SiHCl_2$: | 1,544 g | (13,4 $10^{-3}$ moles) |

Après 52 heures de réaction, la composition est la suivante:

| | |
|---|---|
| $SiH_4$ | 0% |
| $H_3SiCl$ | 0% |
| $CH_3SiH_2Cl$ | 0% |
| $H_2SiCl_2$ | 1,26% |
| $HSiCl_3$ | 6,99% |
| $CH_3SiHCl_2$ | 19,59% |
| $SiCl_4$ | 0,50% |
| $CH_3SiCl_3$ | 1,42% |
| $C_6H_5Cl$ | 70,24% |

ce qui correspond à un taux de transformation de $HSiCl_3$ de 19% et de $CH_3SiHCl_2$ de 5%.

Exemple n° 20

Nous reproduisons dans cet exemple, l'essai précédent en changeant de catalyseur greffe: Tris(dioxa 3,6 heptyl) amine (TDA 1) au lieu de TTA 2 et en changeant le sel: LiBr au lieu de LiCl:

| | | |
|---|---|---|
| Chlorobenzène: | 3,993 g | (35,5 $10^{-3}$ moles) |
| TDA 1 greffée: | 1,095 g | (2,74 $10^{-3}$ moles) |
| LiBr: | 51,9 mg | (0,63 $10^{-3}$ moles) |
| $HSiCl_3$: | 0,834 g | (6,15 $10^{-3}$ moles) |
| $CH_3SiHCl_2$: | 1,398 g | (12,1 $10^{-3}$ moles) |

Après 24 heures de réaction, la composition est la suivante:

| | |
|---|---|
| $SiH_4$ | 0,15% |
| $H_3SiCl$ | 0,43% |
| $CH_3SiH_2Cl$ | 0,22% |
| $H_2SiCl_2$ | 5,66% |
| $HSiCl_3$ | 4,53% |
| $CH_3SiHCl_2$ | 12,19% |
| $SiCl_4$ | 0,03% |
| $CH_3SiCl_3$ | 12,83% |
| $C_6H_5Cl$ | 63,95% |

ce qui correspond à un taux de transformation de $HSiCl_3$ de 66% et de $CH_3SiHCl_2$ de 46%.

Exemple n° 21

Dans des conditions opératoires identiques à celles des essais précédents, nous effectuons un essai de réaction entre $HSiCl_3$ et $CH_3SiHCl_2$ en présence de KCl et d'hexaoxa 4,7,13,16,21,24 diaza 1,10 bicyclo 8,8,8 hexacosane (ce composé est commercialisé sous l'appellation Kryptofix 2,2,2®), essai effectué en milieu chlorobenzène:

| | | |
|---|---|---|
| Chlorobenzène: | 2,973 g | (26,4 $10^{-3}$ moles) |
| Kryptofix 2,2,2: | 0,175 g | (0,46 $10^{-3}$ moles) |
| KCl: | 41,4 mg | (0,56 $10^{-3}$ moles) |
| $HSiCl_3$: | 0,637 g | (4,70 $10^{-3}$ moles) |
| $CH_3SiHCl_2$: | 0,966 g | (8,40 $10^{-3}$ moles) |

Après 4 heures de réaction, la composition est la suivante:

| | |
|---|---|
| $SiH_4$ | 0,06% |
| $H_3SiCl$ | 0,39% |
| $CH_3SiH_2Cl$ | 0,12% |
| $H_2SiCl_2$ | 4,30% |
| $HSiCl_3$ | 6,19% |
| $CH_3SiHCl_2$ | 13,18% |
| $SiCl_4$ | 0,35% |
| $CH_3SiCl_3$ | 8,86% |
| $C_6H_5Cl$ | 62,04% |

ce qui correspond à un taux de transformation de $HSiCl_3$ de 53% et de $CH_3SiHCl_2$ de 35%.

Exemple n° 22

Nous reproduisons dans cet exemple l'essai décrit dans l'exemple précédent mais en remplaçant le Kriptofix 2,2,2 par la 1,4,7,10,13,16 hexaoxacyclooctadécane, commercialisé sous l'appellation 18 couronne 6®:

| | | |
|---|---|---|
| Chlorobenzène: | 3,116 g | (27,7 $10^{-3}$ moles) |
| 18 couronne 6: | 0,160 g | (0,61 $10^{-3}$ moles) |
| KCl: | 50,1 mg | (0,67 $10^{-3}$ moles) |
| $HSiCl_3$: | 0,532 g | (3,93 $10^{-3}$ moles) |
| $CH_3SiHCl_2$: | 0,985 g | (8,56 $10^{-3}$ moles) |

Après 100 heures de réaction, la composition est la suivante:

| | |
|---|---|
| $SiH_4$ | 0,05% |
| $H_3SiCl$ | 0,16% |
| $CH_3SiH_2Cl$ | 0,17% |
| $H_2SiCl_2$ | 3,09% |
| $HSiCl_3$ | 6,24% |
| $CH_3SiHCl_2$ | 15,34% |
| $SiCl_4$ | 0,11% |
| $CH_3SiCl_3$ | 6,17% |
| $C_6H_5Cl$ | 64,34% |

ce qui correspond à un taux de transformation de $HSiCl_3$ de 43% et de $CH_3SiHCl_2$ de 25%.

Exemple n° 23

Dans des conditions opératoires identiques à celles des exemples précédents, nous effectuons un essai avec le système $HSiCl_3$ plus $(CH_3)_2SiHCl$ en présence du système catalytique TDA 1+LiCl et du solvant $C_6H_5Cl$:

| | | |
|---|---|---|
| Chlorobenzène: | 1,743 g | (15,5 $10^{-3}$ moles) |
| TDA 1: | 0,167 g | (0,52 $10^{-3}$ moles) |
| LiCl: | 18,9 mg | (0,45 $10^{-3}$ moles) |
| $HSiCl_3$: | 0,826 g | (6,10 $10^{-3}$ moles) |
| $(CH_3)_2SiHCl$: | 0,295 g | (3,12 $10^{-3}$ moles) |

Après 43 heures de réaction, la composition est la suivante:

| | |
|---|---|
| $SiH_4$ | 0% |
| $H_3SiCl$ | 0% |
| $H_2SiCl_2$ | 5,03% |
| $HSiCl_3$ | 19,72% |
| $(CH_3)_2SiHCl$ | 5,84% |
| $SiCl_4$ | 0,80% |
| $(CH_3)_2SiCl_2$ | 5,84% |
| $C_6H_5Cl$ | 57,14% |

ce qui correspond à un taux de transformation de $HSiCl_3$ de 27% et de $(CH_3)_2SiHCl$ de 44%.

L'équilibre thermodynamique est atteint en 300 heures environ, la composition est alors la suivante:

| | |
|---|---|
| $SiH_4$ | 0,13% |
| $H_3SiCl$ | 0,76% |
| $H_2SiCl_2$ | 6,56% |
| $HSiCl_3$ | 15,98% |
| $(CH_3)_2SiHCl$ | 0,40% |
| $SiCl_4$ | 0,28% |
| $(CH_3)_2SiCl_2$ | 12,65% |
| $C_6H_5Cl$ | 57,14% |

ce qui correspond à un taux de transformation de $HSiCl_3$ de 41% et de $(CH_3)_2SiHCl$ de 96%.

Exemple n° 24

Nous effectuons, dans cet exemple, un essai de redistribution entre $SiCl_4$ et $(CH_3CH_2)_3SiH$, en présence de TDA 1+LiBr comme système catalytique et toujours avec le chlorobenzène comme solvant:

| | | |
|---|---|---|
| Chlorobenzène: | 2,044 g | (18,2 $10^{-3}$ moles) |
| TDA 1: | 1,901 g | (5,87 $10^{-3}$ moles) |
| LiBr: | 0,170 g | (1,96 $10^{-3}$ moles) |
| $SiCl_4$: | 1,068 g | (6,28 $10^{-3}$ moles) |
| $(CH_3CH_2)_3SiH$: | 1,012 g | (8,72 $10^{-3}$ moles) |

Après 20 heures de réaction, la composition est la suivante:

| | |
|---|---|
| $HSiCl_3$ | 13,92% |
| $SiCl_4$ | 8,40% |
| $(CH_3CH_2)_3SiH$ | 12,63% |
| $(CH_3CH_2)_3SiCl$ | 15,49% |
| $C_6H_5Cl$ | 49,56% |

ce qui correspond à un taux de transformation de $SiCl_4$ de 68%.

Exemple n° 25

Dans des conditions opératoires identiques à celles des exemples précédents, on effectue une réaction de redistribution entre $HSiCl_3$ et $(C_6H_5)_2SiHCl$:

| | | |
|---|---|---|
| Chlorobenzène: | 1,834 g | (16,3 $10^{-3}$ moles) |
| TDA 1: | 1,490 g | (4,60 $10^{-3}$ moles) |
| LiBr: | 0,134 g | (1,54 $10^{-3}$ moles) |
| $HSiCl_3$: | 0,601 g | (4,44 $10^{-3}$ moles) |
| $(C_6H_5)_2SiHCl$: | 3,086 g | (14,1 $10^{-3}$ moles) |

Après 23 heures de réaction, la composition est la suivante:

| | |
|---|---|
| $SiH_4$ | 1,25% |
| $H_3SiCl$ | 1,33% |
| $H_2SiCl_2$ | 1,32% |
| $HSiCl_3$ | 1,10% |
| $SiCl_4$ | 0,06% |
| $(C_6H_5)_2SiHCl$ | 18,89% |
| $(C_6H_5)_2SiCl_2$ | 42,85% |
| $C_6H_5Cl$ | 33,20% |

ce qui correspond à un taux de transformation de $HSiCl_3$ de 90% et de $(C_6H_5)_2SiHCl$ de 66%.

Exemple n° 26

Nous reproduisons dans cet exemple l'essai précédent, mais en remplaçant $(C_6H_5)_2SiHCl$ par $C_6H_5(CH_3)SiHCl$:

| | | |
|---|---|---|
| Chlorobenzène: | 1,760 g | (15,6 $10^{-3}$ moles) |
| TDA 1: | 1,289 g | (3,98 $10^{-3}$ moles) |
| LiBr: | 0,116 g | (1,33 $10^{-3}$ moles) |
| $HSiCl_3$: | 0,569 g | (4,19 $10^{-3}$ moles) |
| $C_6H_5(CH_3)SiHCl$: | 1,305 g | (8,34 $10^{-3}$ moles) |

Après 7 heures de réaction, la composition est la suivante:

| | |
|---|---|
| $SiH_4$ | 0,26% |
| $H_3SiCl$ | 1,43% |
| $H_2SiCl_2$ | 3,56% |
| $HSiCl_3$ | 6,78% |
| $SiCl_4$ | 0,05% |
| $C_6H_5(CH_3)SiHCl$ | 19,87% |
| $C_6H_5(CH_3)SiCl_2$ | 19,62% |
| $C_6H_5Cl$ | 48,43% |

ce qui correspond à un taux de transformation de $HSiCl_3$ de 57% et de $C_6H_5(CH_3)SiHCl$ de 45%.

Exemple n° 27

L'essai décrit dans cet exemple est comparable au précédent, il a été effectué en l'absence de solvant:

| | | |
|---|---|---|
| TDA 1: | 1,005 g | (3,11 $10^{-3}$ moles) |
| LiBr: | 90,1 g | (1,03 $10^{-3}$ moles) |
| $HSiCl_3$: | 0,639 g | (4,72 $10^{-3}$ moles) |
| $C_6H_5(CH_3)SiHCl$: | 0,993 g | (6,34 $10^{-3}$ moles) |

Après 7 heures de réaction, la composition est la suivante:

| | |
|---|---|
| $SiH_4$ | 0,84% |
| $H_3SiCl$ | 3,99% |

| | |
|---|---|
| $H_2SiCl_2$ | 10,52% |
| $HSiCl_3$ | 13,36% |
| $SiCl_4$ | 0% |
| $C_6H_5(CH_3)SiHCl$ | 13,34% |
| $C_6H_5(CH_3)SiCl_2$ | 57,95% |

ce qui correspond à un taux de transformation de $HSiCl_3$ de 66% et de $C_6H_5(CH_3)SiHCl$ de 78%.

Exemple n° 28

Dans des conditions analogues à celles de l'exemple précédent (sans solvant) nous avons effectué un essai de redistribution entre $SiCl_4$ et $C_6H_5(CH_3)SiH_2$:

| | | |
|---|---|---|
| TDA 1: | 1,583 g | ($4,90\ 10^{-3}$ moles) |
| LiBr: | 0,142 g | ($1,63\ 10^{-3}$ moles) |
| $SiCl_4$: | 0,894 g | ($5,26\ 10^{-3}$ moles) |
| $C_6H_5(CH_3)SiH_2$: | 1,630 g | ($13,3\ 10^{-3}$ moles) |

Après 1 heure de réaction, la composition est la suivante:

| | |
|---|---|
| $SiH_4$ | 2,86% |
| $H_3SiCl$ | 3,80% |
| $H_2SiCl_2$ | 3,84% |
| $HSiCl_3$ | 2,84% |
| $SiCl_4$ | 0,54% |
| $C_6H_5(CH_3)SiH_2$ | 0% |
| $C_6H_5(CH_3)SiHCl$ | 67,72% |
| $C_6H_5(CH_3)SiCl_2$ | 18,40% |

ce qui correspond à un taux de transformation de $SiCl_4$ de 98% et de $C_6H_5(CH_3)SiH_2$ de 100%.

Exemple n° 29

Nous effectuons dans cet exemple un essai de redistribution entre $SiCl_4$ et $(CH_3)_2SiH(OC_2H_5)$ en absence de solvant:

| | | |
|---|---|---|
| TDA 1: | 0,832 g | ($2,57\ 10^{-3}$ moles) |
| LiBr: | 74,6 mg | ($0,85\ 10^{-3}$ moles) |
| $SiCl_4$: | 0,726 g | ($4,12\ 10^{-3}$ moles) |
| $(CH_3)_2SiH(OC_2H_5)$: | 0,180 g | ($1,73\ 10^{-3}$ moles) |

Après 4 heures 30 de réaction, la composition est la suivante:

| | |
|---|---|
| $(CH_3)_2SiHCl$ | 8,38% |
| $HSiCl_3$ | 14,62% |
| $(CH_3)_2SiH(OC_2H_5)$ | 0% |
| $SiCl_4$ | 46,13% |
| $(CH_3)_2SiCl(OC_2H_5)$ | 14,97% |
| $C_2H_5OSiCl_3$ | 15,90% |
| $C_6H_5(CH_3)SiCl_2$ | 18,40% |

ce qui correspond à un taux de transformation de $SiCl_4$ de 42% et de $(CH_3)_2SiH(OC_2H_5)$ de 100%. On remarque que, parallèlement à la réaction de formation de $HSiCl_3$ désirée, a lieu une réaction d'échange Chlore-éthoxy entre les deux produits réactionnels avec formation de $(CH_3)_2SiClH$ et de $C_2H_5OSiCl_3$.

Exemple n° 30

Nous décrivons, dans ce dernier exemple, un essai de production de dichlorosilane par réaction entre $HSiCl_3$ et $CH_3SiHCl_2$, en présence de TDA 1 plus LiBr comme catalyseur et de $C_6H_5Cl$ comme solvant.

L'appareillage utilisé pour cet essai est le suivant: réacteur en Pyrex® de 1 litre environ, à double enveloppe, avec agitation magnétique, chauffé à l'aide d'un thermostat à circulation. Ce réacteur est surmonté d'une colonne à garnissage anneaux de Fenske puis d'un réfrigérant ascendant afin de condenser les chlorosilanes plus lourds que $H_2SiCl_2$, qui pourraient être entraînés par celui-ci. Ce réfrigérant est refroidi à 5–8 °C.

Le dichlorosilane produit est récupéré par barbottage dans du chlorobenzène refroidi à −30 °C.

L'ensemble de l'appareillage est inerte à l'argon avant introduction des réactifs.

Milieu réactionnel mis en œuvre (les différents composés sont introduits dans l'ordre ci-dessous):

– Chlorobenzène: 4 moles soit 450 g
– TDA 1: 1 mole soit 323 g
– LiBr: 0,165 moles soit 14,3 g

Agitation jusqu'à solubilisation totale du sel. Nous chauffons ensuite le milieu réactionnel jusqu'à 70 °C avant introduction progressive des silanes.

– $CH_3SiHCl_2$: 1 mole soit 115 g
puis $HSiCl_3$: 1 mole soit 135 g

$H_2SiCl_2$ formé se dégage immédiatement (Milieu réactionnel à l'ébullition).

D'après la quantité de $H_2SiCl_2$ obtenue et la quantité de $CH_3SiCl_3$ formée (analyses chromatographiques du milieu réactionnel) le temps nécessaire pour atteindre un taux de transformation des réactifs de 50% est de 9 minutes.

Durée totale de l'essai: 6 heures.

En fin d'essai la température du milieu réactionnel est de 80 °C et le taux de transformation de $CH_3SiHCl_2$ de 80%.

**Revendications**

1. Procédé de fabrication d'hydrogéno-silane par réaction de redistribution caractérisé en ce que l'on met en réaction

– un silane représenté par la formule: $H_mSiX_{4-m}$ dans laquelle X représente un halogène ou un groupement alkoxy et m représente un nombre entier égal à 0, 1, 2 ou 3;

– un alkyle ou aryle hydrogéno-silane représenté par la formule: $R_nH_pSiX'_{4-(n+p)}$ dans laquelle X' représente un halogène ou un groupement alkoxy, R représente un ou des groupements alkyle ou aryle identiques ou différents et n et p identiques ou différents représentent des nombres entiers égaux à 1, 2 ou 3 avec $n+p \leqslant 4$;

– en présence d'un système catalytique comprenant au moins un sel minéral ionique de formule $M^+A^-$ en présence d'au moins un composé complexant susceptible de solubiliser au moins partiellement ledit sel dans le milieu réactionnel par complexation de son cation $M^+$ et de le dissocier au moins partiellement; et en ce que l'on récupère le ou les hydrogéno-silanes formés.

2. Procédé selon la revendication 1 caractérisé en ce que le sel minéral ionique $M^+A^-$ est choisi parmi ceux dans lesquels $M^+$ représente un alcalin, un alcalino-terreux ou l'ammonium et de préférence: $Li^+$, $Na^+$, $K^+$, $Ca^{++}$, $NH^+_4$ et ceux dans lesquels $A^-$ représente un halogène, $SCN^-$, $CN^-$, $CO^{--}_3$ et de préférence: $Cl^-$, $Br^-$, $I^-$.

3. Procédé selon la revendication 1 caractérisé en ce que le composé complexant le cation du sel minéral ionique est un agent séquestrant de formule:

$$[N-(CHR_1-CHR_2-O-(CHR_3-CHR_4-O)_n-R_5)_3] \quad (I)$$

dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_m H_{2m}-\varnothing$ ou $C_m H_{2m+1}-\varnothing-$, où m est compris entre 1 et 12 ($1<m<12$).

4. Procédé selon la revendication 1 caractérisé en ce que le composé complexant est un polyéther macrocyclique ayant de 15 à 30 atomes dans le cycle et constitué de 4 à 10 unités –O–X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayant de 1 à 4 atomes de carbone, un des X pouvant être $-CHR_6-CHR_6-CR_9R_7-$ quand les unités –O–X comprennent le groupement $-O-CHR_6-CHR_7-$.

5. Procédé selon la revendication 1 caractérisé en ce que le composé complexant est un composé macrocyclique ou bicyclique de formule générale IIa ou IIb

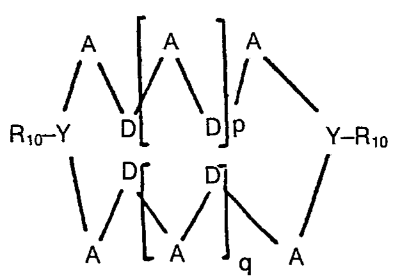

(IIa)

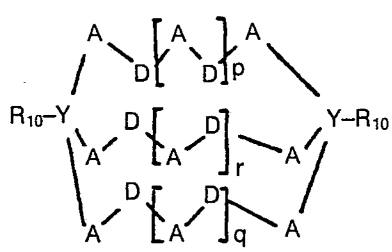

(IIb)

dans lesquelles:

– Y représente N ou P

– A représente un groupement alkylène ayant de 1 à 3 atomes de carbone

– D représente O, S ou $N-R_{11}$ où $R_{11}$ représente un radical alkyle ayant de 1 à 6 atomes de carbone

– $R_{10}$ représente un radical alkyle ayant de 1 à 6 atomes de carbone, p, q et r identiques ou différents sont des nombres entiers compris entre 1 et 5.

6. Procédé selon la revendication 1 caractérisé en ce que le composé complexant est choisi parmi les agents séquestrants, les polyéthers macrocycliques et les composés macrocycliques ou bicycliques greffés sur des supports polymères organiques réticulés.

7. Procédé selon la revendication 6 caractérisé en ce que les agents séquestrants greffés sont constitués par un support polymère organique réticulé et par une pluralité de groupes fonctionnels, fixés sur ledit support, de formule générale:

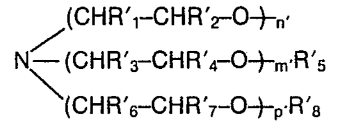

(III)

dans laquelle $R'_1$, $R'_2$, $R'_3$, $R'_4$, $R'_6$ et $R'_7$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$ avec q' supérieur ou égal à 1 et inférieur ou égal à environ 12, et dans laquelle n', m', et p' identiques ou différents sont supérieurs ou égaux à 1 et inférieurs ou égaux à 10.

8. Procédé selon la revendication 3 caractérisé en ce que l'agent séquestrant de formule (I) est choisi parmi:

– la tris(oxa-3 butyl)amine de formule: $N-(-CH_2-CH_2-O-CH_3)_3$

– la tris(dioxa-3,6 heptyl)amine de formule: $N-(-CH_2-CH_2-O-CH_2-CH_2-O-CH_3)_3$

– la tris(trioxa-3,6,9 décyl)amine de formule: $N-(-CH_2-CH_2-O-CH_2-CH_2-O-CH_2-CH_2-O-CH_3)_3$

– la tris(dioxa-3,6 octyl)amine de formule: $N-(-CH_2-CH_2-O-CH_2-CH_2-O-C_2H_5)_3$

– la tris(trioxa-3,6,9 undécyl)amine de formule: $N-(-CH_2-CH_2-O-CH_2-CH_2-O-CH_2-CH_2-O-C_2H_5)_3$

– la tris(dioxa-3,6 nonyl)amine de formule: $N-(-CH_2-CH_2-O-CH_2-CH_2-O-C_3H_7)_3$

– la tris(trioxa-3,6,9 dodécyl)amine de formule: $N-(-CH_2-CH_2-O-CH_2-CH_2-O-CH_2-CH_2-O-C_3H_7)_3$

– la tris(dioxa-3,6 décyl)amine de formule: $N-(-CH_2-CH_2-O-CH_2-CH_2-O-C_4H_9)_3$

– la tris(trioxa-3,6,9 tridécyl)amine de formule: $N-(-CH_2-CH_2-O-CH_2-CH_2-O-CH_2-CH_2-O-C_4H_9)_3$

– la tris(tetra-oxa-3,6,9,12 tridécyl)amine de formule: $N-(-CH_2-CH_2-O-(-CH_2-CH_2-O)_6-CH_3)_3$

– la tris(hexa-oxa-3,6,9,12,15,18 nonadecyl)-amine de formule: $N-(-CH_2-CH_2-O-(CH_2-CH_2-O-)_5-CH_3)_3$

– la tris(dioxa-3,6 méthyl-4 heptyl)amine de formule: $N-(-CH_2-CH_2-OCH-(CH_3)-CH_2-O-CH_3)_3$

– la tris(dioxa-3,6 diméthyl-2,4 heptyl)amine de formule: $N-(-CH_2-CH-(CH_3)-OCH(CH_3)-CH_2-O-CH_3)_3$.

9. Procédé selon la revendication 4 caractérisé en ce que le polyéther macrocyclique est choisi parmi les composés de formule générale:

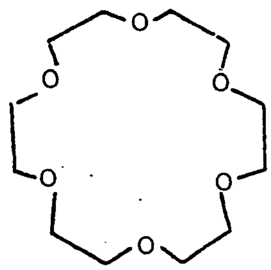

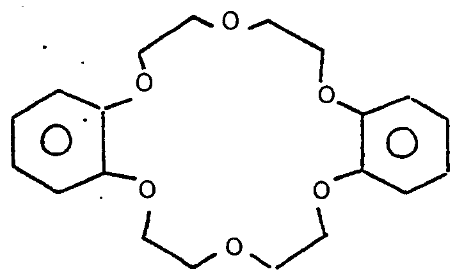

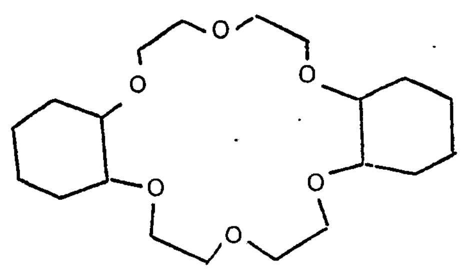

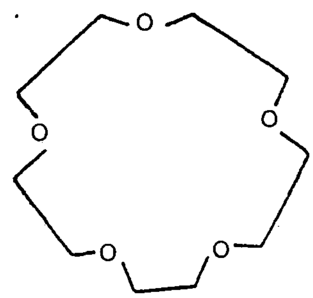

10. Procédé selon la revendication 5 caractérisé en ce que le composé macrocyclique ou bicyclique est choisi parmi les composés de formule générale:

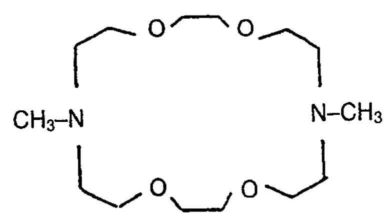

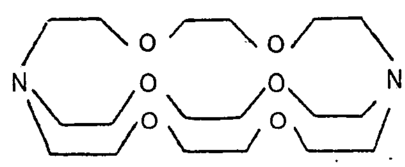

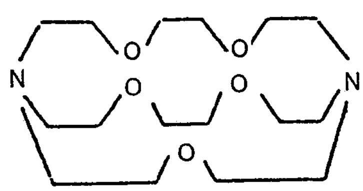

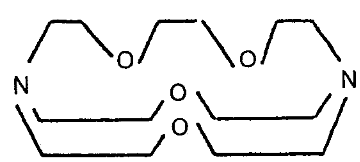

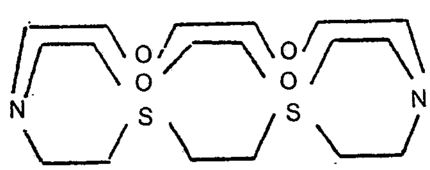

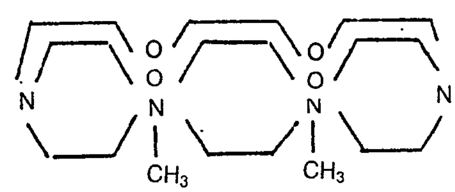

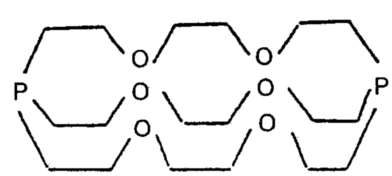

11. Procédé selon la revendication 6 caractérisé en ce que les agents séquestrants greffés sont tels que les groupes fonctionnels de formule générale (III) sont choisis parmi les groupes de formules suivantes:

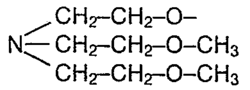

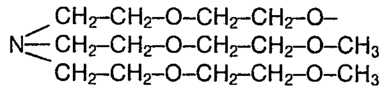

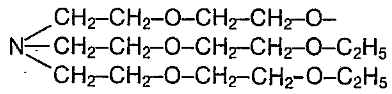

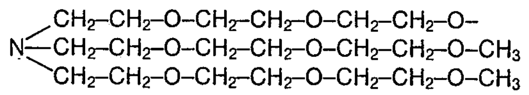

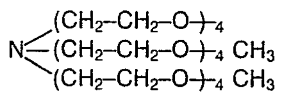

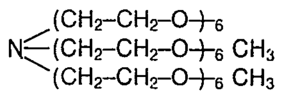

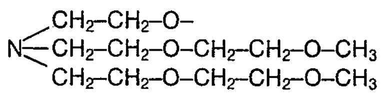

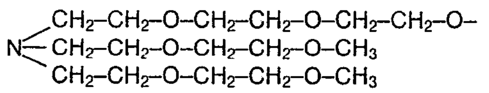

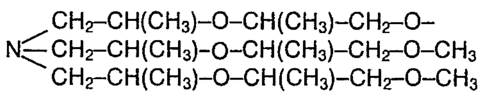

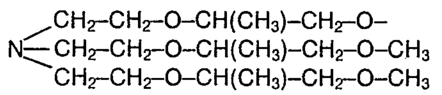

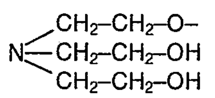

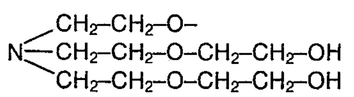

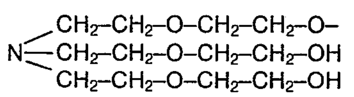

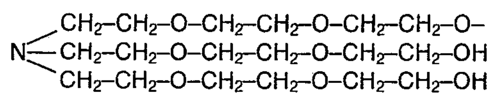

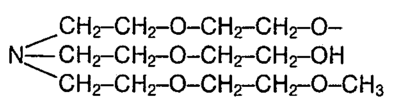

12. Procédé selon la revendication 6 ou 11 caractérisé en ce que les polymères organiques sont choisis parmi les polymères dérivés de composés vinylaromatiques tels que le styrène, le méthylstyrène et les copolymères de composés vinylaromatiques et de diènes conjugés en $C_4$–$C_6$ tels que les copolymères du styrène et du butadiène et du styrène et de l'isoprène.

13. Procédé selon la revendication 1 caractérisé en ce que le rapport molaire du composé complexant au sel minéral ionique est compris entre 0,05 et 100 et de préférence entre 0,5 et 5.

14. Procédé selon la revendication 1 caractérisé en ce que le rapport molaire du sel minéral ionique aux silanes de départ est compris entre 10 et 0,0001 et de préférence entre 0,5 et 0,0001.

**Claims**

1. Process for the manufacture of hydrogenosilane by redistribution reaction, characterized in that a silane represented by the formula $H_mSiX_{4-m}$ in which X represents a halogen or an alkoxy group and m represents an integer equal to 0, 1, 2 or 3, and an alkylhydrogenosilane or arylhydrogenosilane represented by the formula $R_nH_pSiX'_{4-(n+p)}$, in which X′ represents a halogen or an alkoxy group, R represents one or more identical or different alkyl or aryl groups, and n and p, which may be identical or different, represent integers equal to 1, 2 or 3, with $n+p \leq 4$, are reacted in the presence of a catalyst system comprising at least one ionic inorganic salt of the formula $M^+A^-$ in the presence of at least one complexing agent capable of solubilizing the said salt at least partially in the reaction medium by complexing its cation $M^+$ and causing the salt to dissociate at least partially, and in that the hydrogenosilane or hydrogenosilanes formed are recovered.

2. Process according to Claim 1, characterized in that the ionic inorganic salt $M^+A^-$ is chosen from among those in which $M^+$ represents an alkali metal, an alkaline earth metal or ammonium, and preferably $Li^+$, $Na^+$, $K^+$, $Ca^{++}$ and $NH^+$, and those in which $A^-$ represents a halogen, $SCN^-$, $CN^-$ or $CO^{--}{}_3$, and preferably $Cl^-$, $Br^-$ or $I^-$.

3. Process according to Claim 1, characterized in that the compound which complexes the cation of the ionic inorganic salt is a sequestering agent of the formula:

$$[N-(CHR_1-CHR_2-O-(CHR_3-CHR_4-O)_n-R_5)_3] \quad (I)$$

in which n is an integer greater than or equal to 0 and less than or equal to 10 ($0<n<10$), $R_1$, $R_2$, $R_3$ and $R_4$, which may be identical or different, represent a hydrogen atom or an alkyl radical having from 1 to 4 carbon atoms and $R_5$ represents an alkyl or cycloalkyl radical having from 1 to 12 carbon atoms, a phenyl radical or a $-C_mH_{2m}-\varnothing$ or $C_mH_{2m+1}-\varnothing-$ radical, where m is between 1 and 12 ($1<m<12$).

4. Process according to Claim 1, characterized in that the complexing agent is a macrocyclic polyether having from 15 to 30 atoms in the cycle and consisting of 4 to 10 –O–X units in which X is either $-CHR_6-CHR_7-$ or $-CHR_6-CHR_6-CR_9R_7-$, $R_6$, $R_7$, $R_8$ and $R_9$, which may be identical or different, being a hydrogen atom or an alkyl radical having from 1 to 4 carbon atoms, and one of X being able to be $-CHR_6-CHR_8-CR_9R_7-$ if the –O–X units contain the $-O-CHR_6-CHR_7-$ group.

5. Process according to Claim 1, characterized in that the complexing agent is a macrocyclic or bicyclic compound of the general formula IIa or IIb

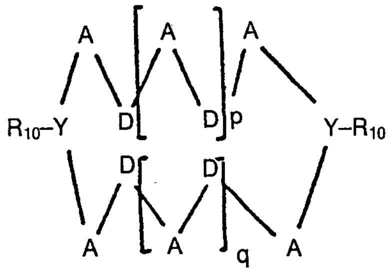
(IIa)

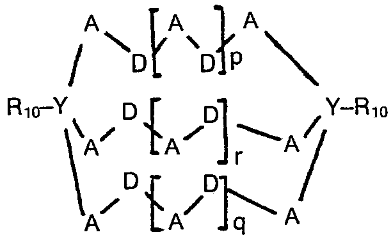
(IIb)

in which Y represents N or P, A represents an alkylene group having from 1 to 3 carbon atoms, D represents O, S or $N-R_{11}$, where $R_{11}$ represents an alkyl radical having from 1 to 6 carbon atoms, and $R_{10}$ represents an alkyl radical having from 1 to 6 carbon atoms, and p, q and r, which may be identical or different, are integers between 1 and 5.

6. Process according to Claim 1, characterized in that the complexing agent is chosen from among sequestering agents, macrocyclic polyethers and macrocyclic or bicyclic compounds grafted onto cross-linked organic polymeric supports.

7. Process according to Claim 6, characterized in that the grafted sequestering agents consist of a cross-linked organic polymeric support and a plurality of functional groups, fixed onto the said support, of the general formula

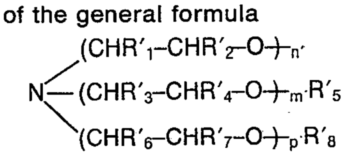
(III)

in which $R'_1$, $R'_2$, $R'_3$, $R'_4$, $R'_6$ and $R'_7$, which may be identical or different, represent a hydrogen atom, an alkyl or cycloalkyl radical having from 1 to 12 carbon atoms, a phenyl radical, a radical $-C_{q'}H_{2q'}-\varnothing-$ or $C_{q'}H_{2q'+1}-\varnothing-$, where q' is greater than or equal to 1 and less than or equal to about 12, and in which n', m' and p', which may be identical or different, are greater than or equal to 1 and less than or equal to 10.

8. Process according to Claim 3, characterized in that the sequestering agent of the formula (I) is chosen from among:

- tris-(3-oxa-butyl)-amine of the formula: $N-(-CH_2-CH_2-O-CH_3)_3$
- tris-(3,6-dioxa-heptyl)-amine of the formula: $N-(-CH_2-CH_2-O-CH_2-CH_2-O-CH_3)_3$
- tris-(3,6,9-trioxa-decyl)-amine of the formula: $N-(-CH_2-CH_2-O-CH_2-CH_2-O-CH_2-CH_2-O-CH_3)_3$
- tris-(3,6-dioxa-octyl)-amine of the formula: $N-(-CH_2-CH_2-O-CH_2-CH_2-O-C_2H_5)_3$
- tris-(3,6,9-trioxa-undecyl)-amine of the formula: $N-(-CH_2-CH_2-O-CH_2-CH_2-O-CH_2-CH_2-O-C_2H_5)_3$
- tris-(3,6-dioxa-nonyl)-amine of the formula: $N-(-CH_2-CH_2-O-CH_2-CH_2-O-C_3H_7)_3$
- tris-(3,6,9-trioxa-dodecyl)-amine of the formula: $N-(-CH_2-CH_2-O-CH_2-CH_2-O-CH_2-CH_2-O-C_3H_7)_3$
- tris-(3,6-dioxa-decyl)-amine of the formula: $N-(-CH_2-CH_2-O-CH_2-CH_2-O-C_4H_9)_3$
- tris-(3,6,9-trioxa-tridecyl)-amine of the formula: $N-(-CH_2-CH_2-O-CH_2-CH_2-O-CH_2-CH_2-O-C_4H_9)_3$
- tris-(3,6,9,12-tetra-oxa-tridecyl)-amine of the formula: $N-(-CH_2-CH_2-O-(-CH_2-CH_2-O)_3-CH_3)_3$
- tris-(3,6,9,12,15,18-hexa-oxa-nonadecyl)-amine of the formula: $N-(-CH_2-CH_2-O-(CH_2-CH_2-O-)_5CH_3)_3$
- tris-(3,6-dioxa-4-methyl-heptyl)-amine of the formula: $N-(-CH_2-CH_2-OCH-(CH_3)-CH_2-O-CH_3)_3$
- tris-(3,6-dioxa-2,4-dimethyl-heptyl)-amine of the formula: $N-(-CH_2CH-(CH_3)-OCH(CH_3)-CH_2-O-CH_3)_3$.

9. Process according to Claim 4, characterized in that the macrocyclic polyether is chosen from among the compounds of the general formula:

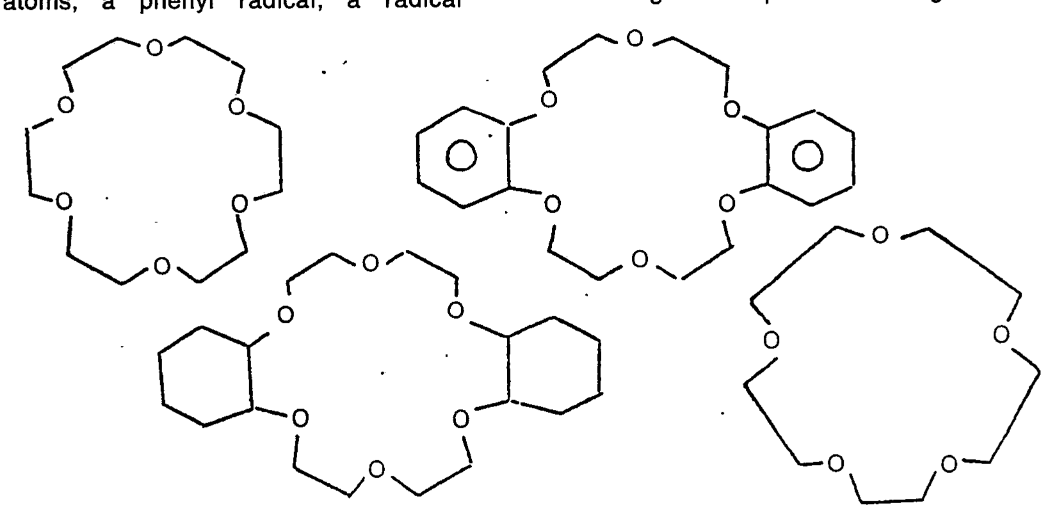

10. Process according to Claim 5, characterized in that the macrocyclic or bicyclic compound is chosen from among the compounds of the general formula:

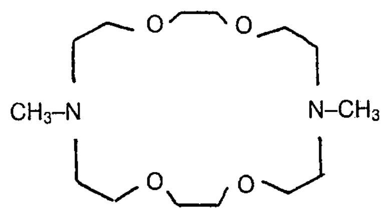

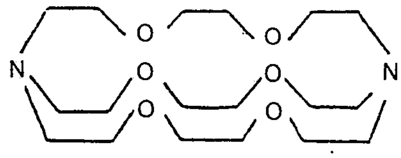

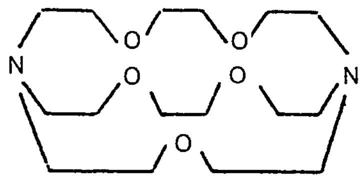

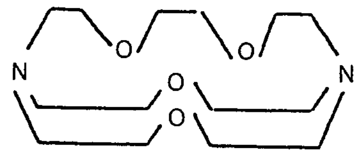

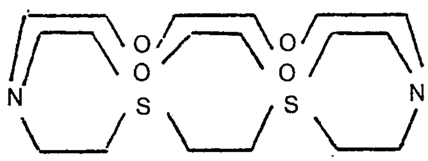

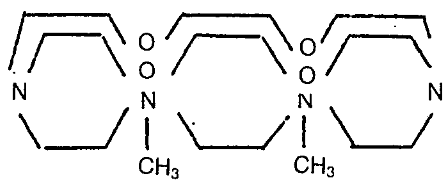

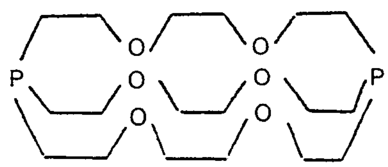

11. Process according to Claim 6, characterized in that the grafted sequestering agents are such that the functional groups of the general formula (III) are chosen from among the groups of the following formulae:

$CH_2-CH_2-O-$
$N \lessdot CH_2-CH_2-O-CH_3$
$CH_2-CH_2-O-CH_3$

$CH_2-CH_2-O-CH_2-CH_2-O-$
$N \lessdot CH_2-CH_2-O-CH_2-CH_2-O-CH_3$
$CH_2-CH_2-O-CH_2-CH_2-O-CH_3$

$CH_2-CH_2-O-CH_2-CH_2-O-$
$N \lessdot CH_2-CH_2-O-CH_2-CH_2-O-C_2H_5$
$CH_2-CH_2-O-CH_2-CH_2-O-C_2H_5$

$CH_2-CH_2-O-CH_2-CH_2-O-CH_2-CH_2-O-$
$N \lessdot CH_2-CH_2-O-CH_2-CH_2-O-CH_2-CH_2-O-CH_3$
$CH_2-CH_2-O-CH_2-CH_2-O-CH_2-CH_2-O-CH_3$

$(CH_2-CH_2-O)_4$
$N \lessdot (CH_2-CH_2-O)_4\ CH_3$
$(CH_2-CH_2-O)_4\ CH_3$

$(CH_2-CH_2-O)_6$
$N \lessdot (CH_2-CH_2-O)_6\ CH_3$
$(CH_2-CH_2-O)_6\ CH_3$

$CH_2-CH_2-O-$
$N \lessdot CH_2-CH_2-O-CH_2-CH_2-O-CH_3$
$CH_2-CH_2-O-CH_2-CH_2-O-CH_3$

$CH_2-CH_2-O-CH_2-CH_2-O-CH_2-CH_2-O-$
$N \lessdot CH_2-CH_2-O-CH_2-CH_2-O-CH_3$
$CH_2-CH_2-O-CH_2-CH_2-O-CH_3$

$CH_2-CH(CH_3)-O-CH(CH_3)-CH_2-O-$
$N \lessdot CH_2-CH(CH_3)-O-CH(CH_3)-CH_2-O-CH_3$
$CH_2-CH(CH_3)-O-CH(CH_3)-CH_2-O-CH_3$

$CH_2-CH_2-O-CH(CH_3)-CH_2-O-$
$N \lessdot CH_2-CH_2-O-CH(CH_3)-CH_2-O-CH_3$
$CH_2-CH_2-O-CH(CH_3)-CH_2-O-CH_3$

$CH_2-CH_2-O-$
$N \lessdot CH_2-CH_2-OH$
$CH_2-CH_2-OH$

$CH_2-CH_2-O-$
$N \lessdot CH_2-CH_2-O-CH_2-CH_2-OH$
$CH_2-CH_2-O-CH_2-CH_2-OH$

$CH_2-CH_2-O-CH_2-CH_2-O-$
$N \lessdot CH_2-CH_2-O-CH_2-CH_2-OH$
$CH_2-CH_2-O-CH_2-CH_2-OH$

$CH_2-CH_2-O-CH_2-CH_2-O-CH_2-CH_2-O-$
$N \lessdot CH_2-CH_2-O-CH_2-CH_2-O-CH_2-CH_2-OH$
$CH_2-CH_2-O-CH_2-CH_2-O-CH_2-CH_2-OH$

$CH_2-CH_2-O-CH_2-CH_2-O-$
$N \lessdot CH_2-CH_2-O-CH_2-CH_2-OH$
$CH_2-CH_2-O-CH_2-CH_2-O-CH_3$

12. Process according to Claim 6 or 11, characterized in that the organic polymers are chosen from among the polymers derived from vinyl-aromatic compounds such as styrene and methylstyrene and the copolymers of vinyl-aromatic compounds and $C_4$–$C_6$ conjugated dienes such as the copolymers of styrene and butadiene and of styrene and isoprene.

13. Process according to Claim 1, characterized in that the molar ratio of the complexing agent to the ionic inorganic salt is between 0.05 and 100 and preferably between 0.5 and 5.

14. Process according to Claim 1, characterized in that the molar ratio of the ionic inorganic salt to the silane starting materials is between 10 and 0.0001 and preferably between 0.5 and 0.0001.

**Patentansprüche**

1. Verfahren zur Herstellung von Hydrogensilanen durch eine Neuverteilungsreaktion, dadurch gekennzeichnet, dass:

- ein Silan der Formel $H_mSiX_{4-m}$, in der X ein Halogen oder eine Alkoxygruppe und m eine ganze Zahl gleich 0, 1, 2 oder 3 ist und
- ein Alkyl- oder Arylhydrogensilan der Formel $R_nH_pSiX'_{4-(n+p)}$, in der X′ ein Halogen oder eine Alkoxygruppe und R eine oder mehrere gleiche oder verschiedene Alkyl- oder Arylgruppen darstellen und n und p gleich oder verschieden und ganze Zahlen gleich 1, 2 oder 3 mit $n+p \leq 4$ sind
- in Anwesenheit eines katalytischen Systems aus mindestens einem ionischen Mineralsalz der Formel $M^+A^-$ und mindestens einem Komplexbildner, der in der Lage ist, mindestens teilweise das genannte Salz im Reaktionsgemisch durch Komplexbildung seines Kations $M^+$ löslich zu machen und es mindestens teilweise zu dissoziieren, zur Reaktion miteinander gebracht werden und dadurch, dass das oder die gebildeten Hydrogensilane gewonnen werden.

2. Verfahren nach Patentanspruch 1, dadurch gekennzeichnet, dass das ionische Mineralsalz $M^+A^-$ unter denen gewählt wurde, in denen $M^+$ ein Alkali- oder Erdalkalimetall oder Ammonium und vorzugsweise $Li^+$, $Na^+$, $K^+$, $Ca^{++}$, $NH^+_4$ bedeutet und in denen $A^-$ ein Halogen, $SCN^-$, $CN^-$, $CO^{--}_3$ und vorzugsweise $Cl^-$, $Br^-$ oder $I^-$ bedeutet.

3. Verfahren nach Patentanspruch 1, dadurch gekennzeichnet, dass die mit dem Kation des ionischen Mineralsalzes einen Komplex bildende Verbindung ein Komplexbildner der Formel

$$[N-(CHR_1-CHR_2-O-(CHR_3-CHR_4-O)_n-R_5)_3] \quad (I)$$

ist, in der n eine ganze Zahl grösser oder gleich 0 und kleiner oder gleich 10 ist ($0 \leq n \leq 10$), $R_1$, $R_2$, $R_3$ und $R_4$ gleich oder verschieden sind und ein Wasserstoffatom oder ein Alkylradikal mit 1 bis 4 Kohlenstoffatomen bedeuten und $R_5$ ein Alkyl- oder Cycloalkylradikal mit 1 bis 12 Kohlenstoffatomen, ein Phenylradikal oder ein Radikal der Form $-C_mH_{2m}-\varnothing-$ oder $C_mH_{2m+1}-\varnothing-$, wobei m eine Zahl zwischen 1 und 12 ist ($1 \leq m \leq 12$).

4. Verfahren nach Patentanspruch 1, dadurch gekennzeichnet, dass der Komplexbildner ein makrocyclischer Polyether mit 15 bis 30 ringbildenden Atomen ist und aus 4 bis 10 Gruppen der Form $-O-X$ besteht, in denen X entweder $-CHR_6-CHR_7-$ oder $-CHR_6-CHR_8-CR_9R_7-$ ist, wobei $R_6$, $R_7$, $R_8$ und $R_9$ identisch oder verschieden sind und ein Wasserstoffatom oder ein Alkylradikal mit 1 bis 4 Kohlenstoffatomen bedeuten, wobei eines der X $-CHR_6-CHR_8-CR_9R_7-$ sein kann, wenn die $-O-X$-Gruppen die Gruppe $O-CHR_6-CHR_7-$ enthalten.

5. Verfahren nach Patentanspruch 1, dadurch gekennzeichnet, dass der Komplexbildner eine makrocyclische oder bicyclische Verbindung der allgemeinen Formel IIa oder IIb ist,

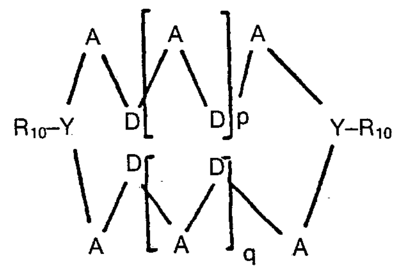

(IIa)

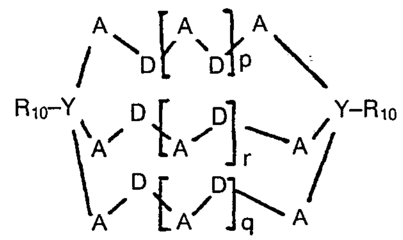

(IIb)

in denen

- Y entweder N oder P bedeutet,
- A eine Alkylengruppe mit 1 bis 3 Kohlenstoffatomen,
- D entweder O, S oder $N-R_{11}$, wobei $R_{11}$ ein Alkylradikal mit 1 bis 6 Kohlenstoffatomen bedeutet,
- $R_{10}$ ein Alkylradikal mit 1 bis 6 Kohlenstoffatomen und p, q und r gleich oder verschieden und ganze Zahlen zwischen 1 und 5 sind.

6. Verfahren nach Patentanspruch 1, dadurch gekennzeichnet, dass die komplexbildende Verbindung aus den auf vernetzte, organische, polymerisierte Trägersubstanzen gepfropften Komplexbildnern, den makrocyclischen Polyethern und makrocyclischen oder bicyclischen Verbindungen gewählt sind.

7. Verfahren nach Patentanspruch 6, dadurch gekennzeichnet, dass die gepfropften Komplexbildner aus einer vernetzten, organischen, polymerisierten Trägersubstanz und einer Vielzahl mit dieser Trägersubstanz verbundener funktioneller Gruppen der allgemeinen Formel

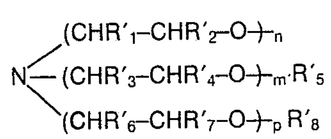

(III)

bestehen, in der $R'_1$, $R'_2$, $R'_3$, $R'_4$, $R'_6$ und $R'_7$ identisch oder verschieden sind und ein Wasserstoffatom, ein Alkyl- oder Cycloalkylradikal mit 1 bis 12 Kohlenstoffatomen, ein Phenylradikal, oder ein Radikal der Form $-C_{q'}H_{2q'}-\varnothing-$ oder $C_{q'}H_{2q'+1}-\varnothing-$ mit q' grösser oder gleich 1 und kleiner oder gleich ca. 12 bedeuten, und in der n', m' und p' gleich oder verschieden und grösser oder gleich 1 und kleiner oder gleich 10 sind.

8. Verfahren nach Patentanspruch 3, dadurch gekennzeichnet, dass der Komplexbildner der Formel (I) eine der folgenden Substanzen ist:
- Tris(3-oxa-butyl)-amin mit der Formel: $N-(-CH_2-CH_2-O-CH_3)_3$
- Tris(3,6-dioxa-heptyl)-amin mit der Formel: $N-(-CH_2-CH_2-O-CH_2-CH_2-O-CH_3)_3$
- Tris(3,6,9-trioxa-decyl)-amin mit der Formel: $N-(-CH_2-CH_2-O-CH_2-CH_2-O-CH_2-CH_2-O-CH_3)_3$
- Tris(3,6-dioxa-octyl)-amin mit der Formel: $N-(-CH_2-CH_2-O-CH_2-CH_2-O-C_2H_5)_3$
- Tris(3,6,9-trioxa-undecyl)-amin mit der Formel: $N-(-CH_2-CH_2-O-CH_2-CH_2-O-CH_2-CH_2-O-C_2H_5)_3$
- Tris(3,6-dioxa-nonyl)-amin mit der Formel: $N-(-CH_2-CH_2-O-CH_2-CH_2-O-C_3H_7)_3$
- Tris(3,6,9-trioxa-dodecyl)-amin mit der Formel: $N-(-CH_2-CH_2-O-CH_2-CH_2-O-CH_2-CH_2-O-C_3H_7)_3$
- Tris(3,6-dioxa-decyl)-amin mit der Formel: $N-(-CH_2-CH_2-O-CH_2-CH_2-O-C_4H_9)_3$
- Tris(3,6,9-trioxa-tridecyl)-amin mit der Formel: $N-(-CH_2-CH_2-O-CH_2-CH_2-O-CH_2-CH_2-O-C_4H_9)_3$
- Tris(3,6,9,12-tetraoxa-tridecyl)-amin mit der Formel: $N-(-CH_2-CH_2-O-(CH_2-CH_2-O)_3-CH_3)_3$
- Tris(3,6,9,12,15,18-Hexaoxa-nonadecyl)-amin mit der Formel: $N-(-CH_2-CH_2-O-(CH_2CH_2-O)_5-CH_3)_3$
- Tris(3,6-dioxa-4-methyl-heptyl)-amin mit der Formel: $N-(-CH_2-CH_2-O-CH(CH_3)-CH_2-O-CH_3)_3$
- Tris(3,6-dioxa-2,4-dimethyl-heptyl)-amin mit der Formel: $N-(-CH_2-CH(CH_3)-O-CH(CH_3)-CH_2O-CH_3)_3$.

9. Verfahren nach Patentanspruch 4, dadurch gekennzeichnet, dass der makrocyclische Polyether der folgenden allgemeinen Formel genügt:

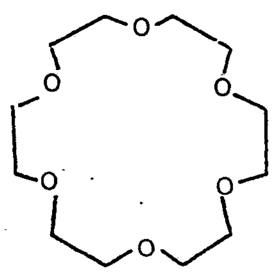

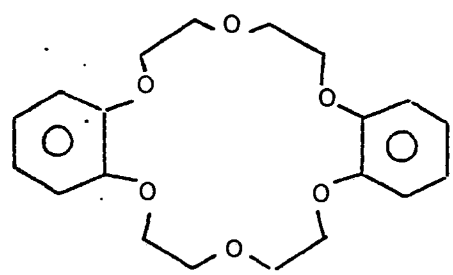

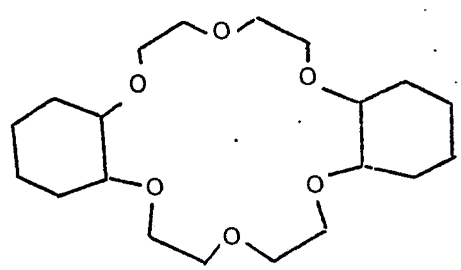

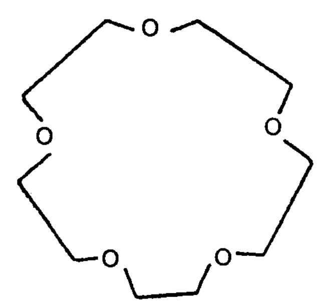

10. Verfahren nach Patentanspruch 5, dadurch gekennzeichnet, dass die makrocyclische oder bicyclische Verbindung der folgenden allgemeinen Formel genügt:

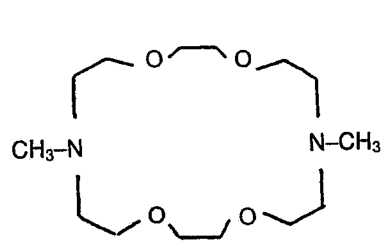

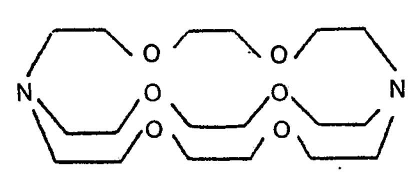

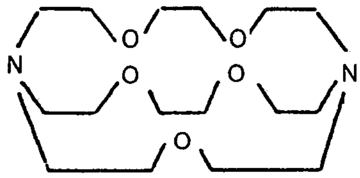

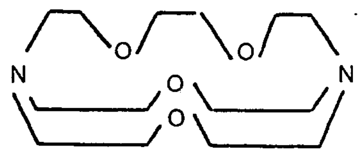

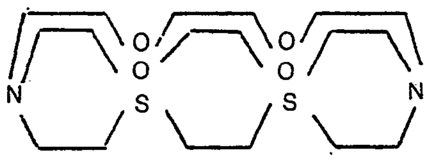

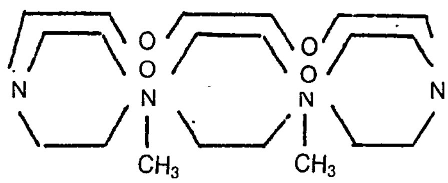

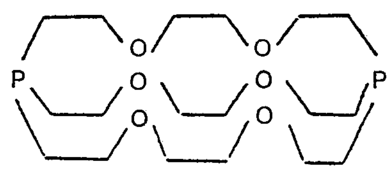

11. Verfahren nach Patentanspruch 6, dadurch gekennzeichnet, dass die gepfropften, der allgemeinen Formel (III) genügenden Komplexbildner aus der Gruppe der Substanzen mit folgenden Formeln gewählt werden:

$CH_2-CH_2-O-$
$N \lt CH_2-CH_2-O-CH_3$
$CH_2-CH_2-O-CH_3$

$CH_2-CH_2-O-CH_2-CH_2-O-$
$N \lt CH_2-CH_2-O-CH_2-CH_2-O-CH_3$
$CH_2-CH_2-O-CH_2-CH_2-O-CH_3$

$CH_2-CH_2-O-CH_2-CH_2-O-$
$N \lt CH_2-CH_2-O-CH_2-CH_2-O-C_2H_5$
$CH_2-CH_2-O-CH_2-CH_2-O-C_2H_5$

$CH_2-CH_2-O-CH_2-CH_2-O-CH_2-CH_2-O-$
$N \lt CH_2-CH_2-O-CH_2-CH_2-O-CH_2-CH_2-O-CH_3$
$CH_2-CH_2-O-CH_2-CH_2-O-CH_2-CH_2-O-CH_3$

$(CH_2-CH_2-O-)_4$
$N \lt (CH_2-CH_2-O-)_4\ CH_3$
$(CH_2-CH_2-O-)_4\ CH_3$

$(CH_2-CH_2-O-)_6$
$N \lt (CH_2-CH_2-O-)_6\ CH_3$
$(CH_2-CH_2-O-)_6\ CH_3$

$CH_2-CH_2-O-$
$N \lt CH_2-CH_2-O-CH_2-CH_2-O-CH_3$
$CH_2-CH_2-O-CH_2-CH_2-O-CH_3$

$CH_2-CH_2-O-CH_2-CH_2-O-CH_2-CH_2-O-$
$N \lt CH_2-CH_2-O-CH_2-CH_2-O-CH_3$
$CH_2-CH_2-O-CH_2-CH_2-O-CH_3$

$CH_2-CH(CH_3)-O-CH(CH_3)-CH_2-O-$
$N \lt CH_2-CH(CH_3)-O-CH(CH_3)-CH_2-O-CH_3$
$CH_2-CH(CH_3)-O-CH(CH_3)-CH_2-O-CH_3$

$CH_2-CH_2-O-CH(CH_3)-CH_2-O-$
$N \lt CH_2-CH_2-O-CH(CH_3)-CH_2-O-CH_3$
$CH_2-CH_2-O-CH(CH_3)-CH_2-O-CH_3$

$CH_2-CH_2-O-$
$N \lt CH_2-CH_2-OH$
$CH_2-CH_2-OH$

$CH_2-CH_2-O-$
$N \lt CH_2-CH_2-O-CH_2-CH_2-OH$
$CH_2-CH_2-O-CH_2-CH_2-OH$

$CH_2-CH_2-O-CH_2-CH_2-O-$
$N \lt CH_2-CH_2-O-CH_2-CH_2-OH$
$CH_2-CH_2-O-CH_2-CH_2-OH$

$CH_2-CH_2-O-CH_2-CH_2-O-CH_2-CH_2-O-$
$N \lt CH_2-CH_2-O-CH_2-CH_2-O-CH_2-CH_2-OH$
$CH_2-CH_2-O-CH_2-CH_2-O-CH_2-CH_2-OH$

$CH_2-CH_2-O-CH_2-CH_2-O-$
$N \lt CH_2-CH_2-O-CH_2-CH_2-OH$
$CH_2-CH_2-O-CH_2-CH_2-O-CH_3$

12. Verfahren nach Patentanspruch 6 oder 11, dadurch gekennzeichnet, dass die organischen Polymere unter den von vinylaromatischen Verbindungen wie Styrol und Methylstyrol abgeleiteten Polymeren und den Copolymeren von vinylaromatischen Verbindungen und konjugierten Dienen mit $C_4-C_6$, wie den Copolymeren von Styrol und Butadien und von Styrol und Isopren gewählt werden.

13. Verfahren nach Patentanspruch 1, dadurch gekennzeichnet, dass das Molverhältnis zwischen der komplexbildenden Verbindung und dem ionischen Mineralsalz zwischen 0,05 und 100 und vorzugsweise zwischen 0,5 und 5 liegt.

14. Verfahren nach Patentanspruch 1, dadurch gekennzeichnet, dass das Molverhältnis zwischen dem ionischen Mineralsalz und den Ausgangssilanen zwischen 10 und 0,0001 und vorzugsweise zwischen 0,5 und 0,0001 liegt.